# EUROPÄISCHE PATENTANMELDUNG

(11) **EP 4 434 916 A1**
(43) Veröffentlichungstag der Anmeldung: **25.09.2024**
(21) Anmeldenummer: 24165504.2
(22) Anmeldetag: 22.03.2024
(51) Int. Cl.: B65G 1/04, G06Q 10/08

(54) **SHUTTLE-SYSTEM MIT EINEM SENKRECHTFÖRDERER-MODUL SOWIE VERFAHREN ZUM BEHEBEN EINER STÖRUNG IN EINEM SENKRECHTFÖRDERER-MODUL EINES SHUTTLE-SYSTEMS**

(30) Priorität: 24.03.2023 DE 102023107535
(71) Anmelder: Gebhardt Fördertechnik GmbH, D-74889 Sinsheim (DE)
(72) Erfinder: Gebhardt, Marco, 74889 Sinsheim (DE); Branner, Fabian, 74915 Waibstadt (DE)
(74) Vertreter: Patentanwälte und Rechtsanwalt Weiß, Arat & Partner mbB

(57) **Zusammenfassung**

Ein Verfahren zum Beheben einer Störung in einem Senkrechtförderer-Modul (8) eines Shuttle-Systems soll durch folgende Schritte gekennzeichnet sein:
- Schliessen der zumindest einen zweiten Barriere (6)
- Öffnen der zumindest einen ersten Barriere (5).

## Beschreibung

### Technisches Gebiet

Die Erfindung betrifft ein Shuttle-System mit einem Senkrechtförderer-Modul sowie ein Verfahren zum Beheben einer Störung in einem Senkrechtförderer-Modul eines Shuttle-Systems gemäss den unabhängigen Ansprüchen.

### Stand der Technik

Shuttle-Systeme sind bereits in vielfältiger Form und Ausgestaltung bekannt und gebräuchlich.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den Unteransprüchen beschrieben.

Ein Shuttle-System gemäss der vorliegenden Erfindung umfasst einen Regalbau mit mehreren Regalebenen und mit zumindest einem Senkrechtförderer-Modul. In den Regalebenen können Shuttles auf Fahrwegen, beispielsweise auf Fahrschienen verkehren, um Ladungsträger oder im Allgemeinen Ladegüter auf Lagerplätzen in den Regalebenen ein- und auszulagern. Bei den Ladungsträgern kann es sich um Paletten handeln. Bei den Shuttles kann es sich entsprechend um Paletten-Shuttles handeln. Das Shuttle-System kann als Paletten-Kanallager ausgestaltet sein. Die vorbeschriebenen Shuttles werden teilweise auch als "Bot" oder "Robot" bezeichnet.

Die Fahrwege auf den Regalebenen können in einem Raster angeordnet sein. Diese Fahrwege können Fahrschienen für die Shuttles und unmittelbar oberhalb der Fahrschienen und parallel zu diesen verlaufende Abstell-Schienen umfassen. Die Shuttles können auf den Fahrschienen fahren, um sich in den Regalebenen fortzubewegen. Jedes Shuttle kann ein vertikal bewegliches Lastaufnahmemittel umfassen, um beispielsweise einen Ladungsträger auf den Abstell-Schienen abstellen und von dort aufnehmen zu können. In Längsrichtung verlaufende Fahrschienen können als Hauptfahrwege, Gassen genannt, dienen. Die Längsrichtung kann beispielsweise in Bezug auf eine Regalebene gewählt oder festgelegt sein. Quer zur Längsrichtung verlaufende Fahrschienen können die Gassen miteinander verbinden. Einfachtiefe oder mehrfachtiefe Lagerkanäle mit darin befindlichen Lagerplätzen können ebenfalls quer zu den Gassen verlaufend angeordnet sein, und im Wesentlichen ausgebildet sein, wie die Fahrwege. Die Lagerkanäle können zugleich als Quer-Verbindungen zwischen den Gassen dienen. Die Shuttles können als sogenannte Vier-Wege-Shuttles ausgebildet sein. Vier-Wege-Shuttles sind eingerichtet, sich auf einem Raster aus orthogonal zueinander verlaufenden und sich kreuzenden Fahrwegen in einer Regalebene beliebig innerhalb dieser Regalebene verkehren zu können. Dies wird oftmals durch die Anordnung von zwei Radsätzen an dem Shuttle gewährleistet. Die Radsätze können jeweils beispielsweise vier oder acht Räder umfassen, d.h. für jede der beiden Fahrtrichtungen kann ein Radsatz mit jeweils vier oder acht Rädern vorhanden sein. Die Anzahl der Räder kann sich zwischen den Radsätzen unterscheiden. Ferner kann auch an Radsätze mit einer anderen Anzahl an Rädern, beispielsweise an Radsätze mit sechs Rädern, gedacht sein. Neben der Anordnung zweier Radsätze sind zahlreiche Alternativen denkbar, wie ein Vier-Wege-Shuttle gestaltet sein kann. Beispielsweise kann daran gedacht sein, Allseitenräder, auch omnidirektionale Räder genannt, vorzusehen. Auf den Laufflächen von Allseitenrädern sind Rollen oder dergleichen angeordnet, wobei die Drehachse des Allseitenrads rechtwinklig zur Drehachse der auf seiner Lauffläche befindlichen Rollen verläuft. Auch sogenannte "Mecanum-Räder", deren Rollen im Gegensatz zu denjenigen von Allseitenrädern nicht rechtwinklig, sondern schräg auf der Lauffläche oder dem Umfang angeordnet sind, sind denkbar. Allgemein kann an beliebige Räder gedacht sein, welche omnidirektionale Fahrmanöver erlauben. In einer einfachen Ausführungsvariante kann auch an gezielt drehbare, d.h. lenkbare Räder gedacht sein.

Ein beliebiges Verkehren innerhalb der Regalebene kann dadurch gewährleistet sein, dass die Drehachsen der Räder sich beispielsweise um 90° drehen, nachdem eine geradlinige Fahrt absolviert wurde, um anschliessend eine, meist abermals geradlinige Fahrt, beispielsweise rechtwinklig zu der zuvor absolvierten Fahrtrichtung zu absolvieren. Alternativ kann ein solches beliebiges Verkehren innerhalb der Regalebene auch dadurch gewährleistet sein, dass das Shuttle eingerichtet ist, enge Kurven zu fahren.

Shuttles mit mehreren Radsätzen werden häufig eingesetzt, wenn in den Regalebenen Fahrschienen vorhanden sind. Shuttles, welche enge Kurven fahren können, werden häufig eingesetzt, um sich auf Fahrwegen fortzubewegen, welche durch flächige Abschnitte der Regalebenen und nicht durch Fahrschienen gebildet werden. Die Fahrwege gemäss der vorliegenden Erfindung können im Allgemeinen durch Fahrschienen, flächige Abschnitte oder auf andere Weise gebildet sein.

Ein Senkrechtförderer-Modul umfasst zumindest einen Senkrechtförderer, welcher Ladegüter, beispielsweise Ladungsträger, oder auch Shuttles befördern kann. Das Senkrechtförderer-Modul kann ferner zumindest einen Übergabeplatz umfassen. Beispielsweise kann an genau einen oder an genau zwei Übergabeplätze gedacht sein. Das Senkrechtförderer-Modul kann auf Höhe mehrerer oder sämtlicher Regalebenen jeweils genau einen oder genau zwei Übergabeplätze umfassen. Besonders bevorzugt sind auf Höhe jeder Regalebene genau ein oder genau zwei Übergabeplätze vorhanden. Das Senkrechtförderer-Modul kann genau einen Senkrechtförderer umfassen. Der Senkrechtförderer kann ein Lastaufnahmemittel, beispielsweise eine Teleskopgabel zur Aufnahme von Paletten und dergleichen von einem der Übergabeplätze, umfassen. Umfasst der Senkrechtförderer kein solches aktives Lastaufnahmemittel, so kann er beispielsweise Träger oder Abstell-Schienen umfassen. Diese Träger oder Abstell-Schienen können so gestaltet sein, dass ein Shuttle sie unterfahren kann, um sein Ladegut darauf abzustellen.

Es kann auch an Senkrechtförderer-Module gedacht sein, welche zwei oder mehr Senkrechtförderer und eine Mehrzahl an Übergabeplätzen aufweisen.

Üblicherweise erstrecken sich das Senkrechtförderer-Modul und somit auch der Senkrechtförderer vertikal entlang mehrerer, vorzugsweise entlang sämtlicher Regalebenen des Regalbaus, und erlaubt in jeder Regalebene eine Übergabe von beispielsweise Ladungsträgern von den Shuttles an den Senkrechtförderer sowie eine Übergabe von dem Senkrechtförderer an die Shuttles. Diese Übergaben können unmittelbar zwischen dem Senkrechtförderer und einem in der betreffenden Regalebene verkehrenden Shuttle stattfinden. Vorzugsweise erfolgen diese Übergaben jedoch mittelbar, indem sowohl das Shuttle als auch der Senkrechtförderer einen zu übergebenden Ladungsträger oder dergleichen auf einen Übergabeplatz abstellen oder einen aufzunehmenden Ladungsträger von einem solchen Übergabeplatz aufnehmen.

Üblicherweise umfasst der Senkrechtförderer ein Grundgerüst sowie eine Plattform oder Kabine, welche sich entlang des Grundgerüsts vertikal bewegen kann, um eine Last, beispielsweise einen Ladungsträger, senkrecht zu transportieren. Die Plattform kann das vorstehend bereits genannte Lastaufnahmemittel, beispielsweise eine Hubgabel, eine Teleskopgabel, einen Rollenförderer, einen Bandförderer oder einen Kettenförderer umfassen oder im Wesentlichen aus einem der vorgenannten aktiven Lastaufnahmemittel bestehen. Die Kabine kann in manchen Ausführungsformen ebenfalls eines der vorgenannten Lastaufnahmemittel umfassen.

Von dem Begriff "Plattform" ist im Rahmen der vorliegenden Erfindung jedes im Wesentlichen offene Mittel umfasst, welches eine Last senkrecht entlang des Grundgerüsts befördern kann, und somit gemeinsam mit dem Grundgerüst den Senkrechtförderer bildet. Beispielsweise ist auch eine am Grundgerüst befestigte Teleskopgabel ohne weiteren Unterbau oder dergleichen als Plattform im Sinne der vorgenannten Definition anzusehen.

Von dem Begriff "Kabine" ist im Rahmen der vorliegenden Erfindung jedes zumindest teilweise geschlossene Mittel umfasst, welches eine Last senkrecht entlang des Grundgerüsts befördern kann, und somit gemeinsam mit diesem den Senkrechtförderer bildet.

Das Grundgerüst kann im Wesentlichen gleichartig gefertigt sein, wie der restliche Regalbau, umfasst aber vorzugsweise zusätzlich alle für Senkrechtförderer üblichen und nötigen Bestandteile, insbesondere zur vertikalen Bewegung der Kabine oder Plattform.

Der Senkrechtförderer umfasst ferner vorzugsweise einen Antrieb oder ist mit einem solchen verbunden. Der Antrieb bewirkt die vorstehend geschilderte senkrechte Bewegung der Plattform oder Kabine entlang des Grundgerüsts.

Falls vorhanden, sind die Übergabeplätze als Vermittler zwischen dem Senkrechtförderer und der jeweils angrenzenden Regalebene ausgestaltet und könnten daher entweder als Bestandteil der Regalebene oder des Senkrechtförderer-Moduls angesehen werden. Im Rahmen der vorliegenden Erfindung werden die Übergabeplätze vorzugsweise als Bestandteil des Senkrechtförderer-Moduls aufgefasst, weil sie, wie nachstehend erläutert, vorzugsweise gemeinsam mit dem Senkrechtförderer gegenüber den Regalebenen durch zumindest eine zweite Barriere abgrenzbar sind.

Die Übergabeplätze können ausgebildet sein als Abschnitt eines Fahrwegs umfassend eine Fahrschiene und eine darüber befindliche Abstell-Schiene. Die Übergabeplätze können sich nahtlos an unmittelbar in der angrenzenden Regalebene verlaufenden Fahrwege anschliessen. Als Trennung kann die nachfolgend beschriebene zweite Barriere sorgen.

Vorzugsweise sind die Übergabeplätze aber nicht Bestandteil eines Fahrwegs innerhalb der Regalebenen, sondern nur identisch wie solche Fahrwege ausgebildet. Die Übergabeplätze können parallel oder insbesondere orthogonal zu einem Fahrweg innerhalb einer Regalebene angeordnet sein. Hierbei sind derart ausgebildete Übergabeplätze vorzugsweise über eine Kreuzung oder dergleichen mit dem Fahrweg innerhalb der angrenzenden Regalebene verbunden, um beispielsweise einem in dieser Regalebene verkehrenden Shuttle die Einfahrt in den Übergabeplatz zu ermöglichen. Sind sowohl die Fahrwege als auch die Übergabeplätze aus Schienen gebildet, so beziehen sich die vorgenannten Richtungs-Angaben vorzugsweise jeweils auf entsprechende Schienen-Längsrichtungen.

Das Senkrechtförderer-Modul umfasst auf Höhe einer an das Senkrechtförderer-Modul angrenzenden Regalebene zumindest eine erste Barriere, welche zwischen einer offenen und einer geschlossenen Position hin- und her bewegt werden kann, wobei die erste Barriere eingerichtet ist, in der offenen Position einer Bedienperson Zutritt zu zumindest einem Abschnitt des Senkrechtförderer-Moduls zu gewähren. Dieser zumindest eine Abschnitt des Senkrechtförderer-Moduls liegt vorzugsweise ebenfalls auf Höhe der angrenzenden Regalebene. Hierbei meint "auf Höhe einer/der Regalebene" im Hinblick auf die Anordnung der ersten Barriere und des Abschnitts keine genau festgelegte Höhe innerhalb des Regalbaus. Vielmehr meint "auf Höhe" vorzugsweise, dass der vorbeschriebene Abschnitt und die vorbeschriebene erste Barriere dahingehend derselben Regalebene zugeordnet sind, dass eine durch die erste Barriere in den Abschnitt eintretende Bedienperson auf demselben Abschnitt des Senkrechtförderers stehen würde, auf dem sich auch ein Shuttle befände, welches aus der angrenzenden Regalebene in den Abschnitt des Senkrechtförderers einfahren würde.

Das Senkrechtförderer-Modul kann auf Höhe einer, mehrerer oder jeder angrenzenden Regalebene jeweils genau eine erste Barriere umfassen. Das Senkrechtförderer-Modul kann dort auch jeweils genau zwei oder mehr als zwei erste Barrieren umfassen.

Der zumindest eine Abschnitt des Senkrechtförderer-Moduls kann einer der Übergabeplätze, falls vorhanden, sein. Der zumindest eine Abschnitt kann jeder beliebige Bereich innerhalb des Senkrechtförderer-Moduls sein, beispielsweise auch das gesamte Senkrechtförderer-Modul.

Der vorstehend genannte Abschnitt des Senkrechtförderer-Moduls kann ein Trittgitter in Form eines Gitterrosts oder dergleichen sein oder ein solches umfassen. Auf einem solchen Trittgitter oder dergleichen kann eine in das Senkrechtförderer-Modul eintretende Bedienperson sicher stehen. Dieses Trittgitter oder dergleichen muss nicht zwingend auf exakt derselben Höhe wie die in der angrenzenden Regalebene verlaufenden Fahrwege oder wie beispielsweise die innerhalb des Senkrechtförderer-Moduls gelegene Fahrschiene angeordnet sein. Vertikale Abweichungen von einigen Zentimetern oder sogar Dezimetern sind durchaus möglich. Dennoch wird im Rahmen der vorliegenden Erfindung davon gesprochen, dass sich der Abschnitt, die Barriere und die angrenzende Regalebene auf derselben Höhe befinden.

Zwischen dem vorgenannten zumindest einen Abschnitt des Senkrechtförderer-Moduls und einer angrenzenden Regalebene ist zumindest eine zweite Barriere angeordnet, welche zwischen einer offenen und einer geschlossenen Position hin- und her bewegt werden kann, wobei die zweite Barriere eingerichtet ist, in der offenen Position einem in der angrenzenden Regalebene verkehrenden Shuttle eine Einfahrt in den zumindest einen Abschnitt zu gewähren und/oder in der geschlossenen Position der Bedienperson den Zutritt zur angrenzenden Regalebene zu verwehren. In der geschlossenen Position verwehrt die zweite Barriere vorzugsweise auch einem Shuttle die Einfahrt in den zumindest einen Abschnitt des Senkrechtförderer-Moduls.

Das Senkrechtförderer-Modul kann auf Höhe einer, mehrerer oder jeder angrenzenden Regalebene jeweils genau eine zweite Barriere umfassen. Das Senkrechtförderer-Modul kann dort auch jeweils mehrere, beispielsweise genau zwei oder mehr als zwei solcher zweiten Barrieren umfassen. Auf derselben Höhe oder auf denselben Höhen kann das Senkrechtförderer-Modul jeweils auch zumindest eine erste Barriere umfassen.

Es kann jedoch auch daran gedacht sein, dass die ersten Barrieren nur beispielsweise auf Höhe jeder zweiten Regalebene vorgesehen sind, während auf jeder Regalebene zweite Barrieren vorgesehen sind. In solchen Fällen sind vorzugsweise entsprechende Bühnen oder dergleichen, welche nachstehend noch näher erläutert werden, ebenfalls nur auf jeder zweiten Regalebene vorgesehen.

Die erste Barriere ist derart angeordnet, dass sie im geöffneten Zustand eine Bedienperson von aussen Zugang zu dem zumindest einen Abschnitt des Senkrechtförderer-Moduls gewährt, ohne dass die Bedienperson dabei einen Fahrweg des zumindest einen Shuttles kreuzen muss.

Die Bedienperson muss also vorzugsweise nicht in eine üblicherweise mit einem Zaun oder dergleichen abgegrenzte Regalebene eintreten, um zu dem Senkrechtförderer-Modul zu gelangen. Ein Zaun bezeichnet im Rahmen der vorliegenden Erfindung vorzugsweise eine feststehende Einrichtung zur Zugangsverhinderung. In sämtlichen Ausführungsvarianten der vorliegenden Erfindung kann daran gedacht sein, dass der Regalbau gegenüber einem unbefugten Zutritt, beispielsweise durch eine - auch nur zeitweise - nicht befugte Bedienperson durch einen Zaun gesichert ist. Dies dient in der Regel der Unfallverhütung. Insbesondere können Regalebenen und Senkrechtförderer-Module durch entsprechende Zäune gegen einen solchen Zutritt gesichert sein. Die bereits beschriebenen ersten Barrieren können die einzigen Zutrittsmöglichkeiten innerhalb des Zauns bilden.

Vorzugsweise ist das Senkrechtförderer-Modul randständig am Regalbau angeordnet, um für Bedienpersonen von aussen zugänglich zu sein, ohne hierfür eine der Regalebenen des Regalbaus passieren zu müssen. Schon allein die randständige Lage des Senkrechtförderer-Moduls bewirkt daher, dass bei einer Störung und ihrer anschliessenden Beseitigung in diesem Senkrechtförderer-Modul der Betrieb des zugehörigen Shuttle-Systems, beispielsweise des Paletten-Kanallagers, möglichst wenig beeinträchtigt werden muss.

Üblicherweise umfasst das Senkrechtförderer-Modul zumindest einen ersten und einen zweiten Durchgang. Vorzugsweise ist auf Höhe jeder Regalebene zumindest ein zweiter Durchgang angeordnet, und auf Höhe jeder oder beispielsweise jeder zweiten Regalebene ein erster Durchgang. In der geschlossenen Position versperrt zumindest eine erste Barriere den ersten Durchgang, während der zweite Durchgang in der geschlossenen Position von zumindest einer zweiten Barriere versperrt wird. Die Durchgänge sind im Wesentlichen offene Abschnitte des Senkrechtförderer-Moduls, die von einem Shuttle und/oder einer Bedienperson passiert werden können, sofern sie nicht durch eine passende Barriere verschlossen sind.

Die erste und die zweite Barriere können gleichartig oder verschiedenartig ausgestaltet sein.

Die Barrieren können grundsätzlich in Form eines Tors, beispielsweise eines Rolltors oder eines Sektionaltors gestaltet sein. Ferner kann an Flügel- oder Schiebetüren gedacht sein.

Wie nachstehend noch näher ausgeführt ist, kann die Anordnung umfassend die erste und die zweite Barriere einer Bedienperson Zutritt zum Senkrechtförderer-Modul gewähren, um dort eine Störung zu beheben, ohne dass der gesamte Regalbau "stillgelegt" werden muss. Vorzugsweise muss selbst die auf Höhe der Störung an das Senkrechtförderer-Modul angrenzende Regalebene nicht "stillgelegt" werden. Stattdessen kann daran gedacht sein, dass nur die zumindest eine beschriebene zweite Barriere geschlossen sein muss, und dass vorzugsweise der betreffende Senkrechtförderer des Senkrechtförderer-Moduls stillgelegt, d.h. ausser Betrieb gesetzt werden muss, so dass seine Plattform oder Kabine sich nicht mehr bewegt. Alle übrigen Regalebenen und Bereiche des Shuttle-Systems, also insbesondere andere Shuttles und etwaige andere Senkrechtförderer benachbarter oder weiter entfernt liegender Senkrechtförderer-Module, in denen keine Störungen vorliegen, können weiterhin im Normalbetrieb verbleiben.

Eine Störung kann verschiedenste Ursachen haben. Häufig ist eine fehlerhaft auf einem Übergabeplatz abgestellte Palette Grund für eine Störung, weil beispielsweise die Teleskopgabel des Senkrechtförderers die beispielsweise schräg abgestellte Palette nicht aufnehmen kann oder sogar beschädigt hat. Auch eine anderweitig beschädigte Palette auf dem Übergabeplatz kann Ursache für eine Störung sein. Dasselbe gilt im Allgemeinen für schräg abgestellte oder schadhafte Ladungsträger oder heruntergefallene Ladung. Weiterhin kann ein technischer Defekt des Senkrechtförderers Ursache der Störung sein, oder irgendein fehlerhafter oder schadhafter Sensor oder dergleichen innerhalb des Senkrechtförderer-Moduls. Daneben kann auch ein im Senkrechtförderer-Modul, insbesondere auf einem Übergabeplatz befindliches Shuttle eine Störung aufweisen. Transportiert der Senkrechtförderer nicht oder nicht nur Ladegüter, sondern auch Shuttles, so kann eine Störung beispielsweise auch auftreten, wenn ein Auffahren eines Shuttles auf den Senkrechtförderer, bspw. auf die Plattform oder in die Kabine, misslingt. Weitere Störungen sind denkbar.

Befindet sich ein Shuttle in dem Senkrechtförderer-Modul auf derselben Höhe wie die Störung, so kann dieses vorzugsweise durch manuelles Betätigen eines entsprechenden Schalters entweder direkt am Fahrzeug oder über Funk von ausserhalb der ersten Barriere ausgeschaltet werden, und stellt somit keine Gefahr für die Bedienperson dar. Zusätzlich oder alternativ kann, wie weiter unten beschrieben, daran gedacht sein, dass ein solches Shuttle durch die zweite Barriere oder eine mit ihr verbundene Einrichtung "eingesperrt" oder "angekettet", also beispielsweise arretiert, werden kann.

In Betriebslage befindet sich die erste Barriere üblicherweise in der geschlossenen Position, um Personen einen Zutritt in das Senkrechtförderer-Modul zu verwehren. Die zweite Barriere befindet sich in Betriebslage üblicherweise in der offenen Position, um einem Shuttle die Einfahrt in das Senkrechtförderer-Modul zu erlauben. Das Vorgenannte gilt vorzugsweise für sämtliche ersten und zweiten Barrieren in Betriebslage.

Sämtliche Ausführungsformen der vorliegenden Erfindung können es einer Bedienperson ermöglichen, eine Störung im Senkrechtförderer-Modul zu beheben, ohne sich hierbei der auf den Fahrwegen der Regalebenen herrschenden Gefahr durch dort verkehrende Shuttles aussetzen zu müssen. An sämtlichen Ausführungsformen der vorliegenden Erfindung kann weiterhin vorteilhaft sein, dass ein Abschalten etwaiger in der Regalebene verkehrender Shuttles nicht nötig ist, während die Störung im Senkrechtförderer-Modul behoben wird.

Damit sich die Bedienperson im Störungsfall schnell über die erste Barriere Zutritt zum entsprechenden Senkrechtförderer-Modul beschaffen kann, kann daran gedacht sein, ein Gerüst ähnlich einer vom Hausbau her bekannten Feuertreppe vorzusehen. Dieses Gerüst kann eine Leiter oder Treppe sowie mehrere horizontal sich erstreckende Balkon-artige Abschnitte, beispielsweise Bühnen, aufweisen.

Ein senkrechter Abstand zwischen den Bühnen oder dergleichen korrespondiert vorzugsweise mit einem senkrechten Abstand zwischen den Regalebenen. Hierbei meint "korrespondieren" vorzugsweise, dass der senkrechte Abstand der Bühnen oder dergleichen identisch oder ein geradzahliges Vielfaches des senkrechten Abstands der Regalebenen ist. Es ist durchaus denkbar, dass die Bedienperson über dieselbe Bühne Zugang zu verschiedenen übereinander liegenden Abschnitten, beispielsweise Übergabeplätzen, des Senkrechtförderer-Moduls erhält.

Das Gerüst erlaubt der Bedienperson einen schnellen Zugang in das Senkrechtförderermodul über die erste Barriere, ohne dass die Bedienperson hierfür in den Regalbau eintreten müsste. Das vorgenannte Gerüst ist vorzugsweise neben oder unmittelbar an dem Senkrechtförderermodul angeordnet und somit ebenfalls randständig, und nicht etwa mittig innerhalb des Regalbaus angeordnet. Neben einem wie vorstehend beschrieben gestalteten Gerüst mit feststehenden Balkon-artigen Bühnen oder entsprechenden Abschnitten kann auch an Scherenhubtische oder andersartige bewegliche Bühnen gedacht sein, über welche die Bedienperson Zugang zu den Senkrechtförderer-Modulen erlangen kann.

Gemäss einer Ausführungsform der vorliegenden Erfindung können die erste und/oder die zweite Barriere Bestandteile einer übergeordneten Barriere, beispielsweise eines Sektionaltors, sein. Ein solches Sektionaltor und im Allgemeinen eine übergeordnete Barriere kann horizontal verschiebbar sein, es kann aber auch an ein vertikal verschiebbares Sektionaltor gedacht sein. Altennativ kann die übergeordnete Barriere als Tür, Gitter, oder dergleichen ausgeführt sein. Da sich derart ausgebildete Barrieren notwendigerweise synchron bewegen, ist eine nachstehend beschriebene Kopplung nicht nötig.

Das Vorsehen einer übergeordneten Barriere kann es ermöglichen, das Senkrechtförderer-Modul einfach und mit einer geringen Anfälligkeit für Störungen zu bauen, weil für das Öffnen und Versperren der Durchgänge keine oder wenige verkettete Elemente nötig sind.

Eine einzige übergeordnete Barriere kann die Funktion von zumindest einer ersten und zumindest einer zweiten Barriere ersetzen, welche auf derselben Höhe angeordnet sind. Eine übergeordnete Barriere kann zusätzlich als vertikal mehrere Regalebenen übergreifende Barriere ausgestaltet sein, die weiter unten näher beschrieben ist.

Gemäss einer alternativen Ausführungsform können die erste und die zweite Barriere separate Einheiten sein, welche derart miteinander gekoppelt sind, dass die erste Barriere einer Bedienperson nur dann Zugang zu dem zumindest einen Abschnitt des Senkrechtförderer-Moduls gewährt, wenn die zweite Barriere dem Shuttle keinen Zugang zu dem zumindest einen Abschnitt des Senkrechtförderer-Moduls gewährt und/oder wenn die zweite Barriere der Bedienperson den Zutritt zur angrenzenden Regalebene über das Senkrechtförderer-Modul verwehrt.

Sind die Barrieren separate Einheiten, so kann jede Barriere auf die jeweils am ersten und zweiten Durchgang herrschenden Anforderungen hin angepasst sein.

In sämtlichen Ausführungsbeispielen kann vorzugsweise daran gedacht sein, dass die Barrieren derart miteinander gekoppelt sind, dass die erste Barriere einer Bedienperson nur dann Zugang zu dem zumindest einen Abschnitt des Senkrechtförderer-Moduls gewährt, wenn die zweite Barriere dem Shuttle keinen Zugang zu dem zumindest einen Abschnitt des Senkrechtförderer-Moduls gewährt. Dies kann auch durch das weiter unten beschriebene erfindungsgemässe Verfahren bewerkstelligt werden.

Es sind zahlreiche Möglichkeiten denkbar, wie die beiden Barrieren ausgestaltet sein können.

Die Barrieren können als **Zugangs-Verhinderungs-Einrichtung** (nachfolgend "Zugangsverhinderung") ausgestaltet sein. Eine als Zugangsverhinderung ausgestaltete erste Barriere kann den Zugang einer Bedienperson zu dem Senkrechtförderer-Modul unterbinden.

Die erste Barriere kann auch ausgebildet sein, um zu verhindern, dass eine Bedienperson in das Senkrechtförderer-Modul hineingreift. Beispielsweise kann die erste Barriere so ausgestaltet sein, dass eine Bedienperson nicht mit dem Arm hindurchgreifen kann, oder jedenfalls, beispielsweise durch geeignete Abmessungen, im Falle eines solchen Hindurchgreifens nicht Gefahr läuft, von einem beispielsweise in das Senkrechtförderer-Modul einfahrenden Shuttle oder durch die Teleskopgabel oder andere Bestandteile des Senkrechtförderers verletzt zu werden. Abhängig von etwaigen vorhanden Öffnungen oder dergleichen innerhalb der ersten Barriere kann daran gedacht sein, diese so weit entfernt von möglichen Aufenthaltsorten des Shuttles innerhalb des Senkrechtförderer-Moduls anzuordnen, dass eine Verletzung der Bedienperson ausgeschlossen ist.

Zusätzlich oder alternativ kann eine derart ausgestaltete erste Barriere verhindern, dass ein im Senkrechtförderer-Modul befindliches Shuttle das Senkrechtförderer-Modul nach aussen, d.h. zum Beispiel in Richtung Bühne anstatt in Richtung Regalebene, verlässt.

Eine als Zugangsverhinderung ausgestaltete zweite Barriere kann eine im Senkrechtförderer-Modul befindliche Bedienperson daran hindern, in die angrenzende Regalebene des Regalbaus einzutreten. Die zweite Barriere hindert die Bedienperson vorzugsweise auch daran, in die angrenzende Regalebene einzugreifen. Zusätzlich oder alternativ kann eine derart ausgestaltete zweite Barriere im geschlossenen Zustand verhindern, dass ein in der angrenzenden Regalebene verkehrendes Shuttle in das Senkrechtförderer-Modul gelangt, wenn sich eine zu schützende Bedienperson im Senkrechtförderer-Modul befindet. Dies ist üblicherweise während der Behebung einer Störung im betreffenden Senkrechtförderer-Modul der Fall.

Obwohl nicht jedes Mal im Detail ausgeführt, beziehen sich die vorstehenden und auch die nachstehenden Überlegungen vorzugsweise auf eine einzige Regalebene und einen einzigen an diese Regalebene angrenzenden Abschnitt des Senkrechtförderer-Moduls. So wird eine Störung sehr häufig auf Höhe einer bestimmten Regalebene, insbesondere auf einem Übergabeplatz, vorliegen. Die Bedienperson wird zur Störungsbeseitigung dann über die erste Barriere auf Höhe der betreffenden Regalebene in das Senkrechtförderer-Modul eintreten. Ein unerwünschterweise, d.h. fehlerhaft in das Senkrechtförderer-Modul einfahrendes Shuttle kann der darin befindlichen Bedienperson üblicherweise nur gefährlich werden, wenn das Shuttle von derjenigen Regalebene in das Senkrechtförderer-Modul, beispielsweise in den Übergabeplatz einfährt, auf oder in dem sich die Bedienperson aufhält. Die zweiten Barrieren des betreffenden Senkrechtförderer-Moduls auf Höhe der übrigen Regalebenen können in der geöffneten Position verbleiben. Shuttles in diesen anderen Regalebenen können beispielsweise Ladungsträger an die dortigen Übergabeplätze übergeben und von diesen Übergabeplätzen übernehmen.

Üblicherweise wird zwar im Falle einer Störung der Senkrechtförderer des von der Störung betroffenen Senkrechtförderer-Moduls angehalten. Um die Effizienz und den Durchsatz nicht unnötig zu senken, können jedoch, soweit möglich, Übernahmen und Übergaben von Ladungsträgern oder dergleichen an möglichst vielen Übergabeplätzen stattfinden. Hierfür können die zweiten Barrieren auf Höhe von Regalebenen oberhalb und unterhalb der geschlossenen zweiten Barriere geöffnet bleiben. In einigen Ausführungsbeispielen kann, um die Bedienperson nicht zu gefährden, auch die gesamte Regalebene, auf deren Höhe die Störung im Senkrechtförderer-Modul vorliegt, "stillgelegt" werden, so dass die dort befindlichen Shuttles während der Störungs-Behebung stillstehen. In einigen Ausführungsformen ist es allerdings denkbar, dass nicht nur die vorstehend beschriebene eine Regalebene "stillgelegt" wird, sondern auch benachbarte Regalebenen, insbesondere die direkt darüber und darunter liegenden Regalebenen. Es kann also daran gedacht sein, dass sämtliche Shuttles in derjenigen Regalebene, auf deren Höhe die Störung vorliegt, sowie gegebenenfalls in den unmittelbar oberhalb und/oder unterhalb befindlichen Regalebenen "stillgelegt" werden. Dies wird an anderer Stelle noch ausführlicher beschrieben.

Als Zugangsverhinderung kommen zahlreiche Bauteile in Betracht: Türen, beispielsweise Schiebetüren oder schwenkbare Türen; Tore, beispielsweise Rolltore, Sektionaltore, etc.; Gitter, beispielsweise Rollgitter; oder andere Bauteile, welche eine Bedienperson daran hindern, den von der Zugangsverhinderung versperrten Bereich, insbesondere Durchgang, zu passieren. Etwaige Öffnungen innerhalb einer solchen Zugangsverhinderung sind also vorzugsweise so klein, dass eine Bedienperson nicht hindurchpasst. Um die Verletzungsgefahr weiter zu reduzieren, kann daran gedacht sein, dass etwaige Öffnungen auch das Hindurchstrecken von Gliedmassen nicht erlauben.

Die Zugangsverhinderung ist vorzugsweise so gestaltet, dass sie im geschlossenen Zustand durch die Bedienperson nicht geöffnet werden kann, sofern diese keine rohe Gewalt anwendet oder entsprechende Werkzeuge entgegen dem bestimmungsgemässen Gebrauch einsetzt. Beispielsweise kann daran gedacht sein, eine Zuhaltung, beispielsweise eine Magnetzuhaltung einzusetzen, welche bei der Anwendung von Kräften, die üblicherweise zum Öffnen von Türen und Toren aufgebracht werden, ein Öffnen der geschlossenen Zugangsverhinderung nicht erlauben. Anstelle einer Magnetzuhaltung kann auch an ein mechanisch wirkendes Element wie eine Sperre oder einen Riegel gedacht sein, welches dieselbe Funktion erfüllen kann.

Die Zugangsverhinderung kann weiterhin so robust ausgeführt sein, dass sie durch ein fehlerhaftes Shuttle, welches durch die geschlossene Zugangsverhinderung hindurchzufahren versucht, nicht zerstört wird. Hierbei ist zu bedenken, dass die kinetische Energie und somit auch der Anhalteweg eines sich fehlerhaft bewegenden und möglicherweise schwer beladenen Shuttles auf Grund seiner Masse von durchaus mehreren Hundert Kilogramm bis hin zu über einer Tonne sehr gross sein kann.

Die Barriere kann alternativ als **visuelle Zugangs-Warn-Einrichtung** (nachfolgend "Zugangswarnung") ausgestaltet sein. Hierbei kann insbesondere an eine Schranke gedacht sein, welche einer Bedienperson signalisiert, dass der von der Schranke versperrte Bereich, insbesondere ein versperrter Durchgang, nicht passiert werden sollte. Eine solche Schranke kann eingerichtet sein, dass sie im geschlossenen Zustand von einem Kollisionssensor des Shuttles als Hindernis erkannt wird. Auf diese Weise kann eine entsprechend gestaltete Schranke in Verbindung mit dem Kollisionssensor des Shuttles die Durchfahrt eines Shuttles verhindern. Weiterhin kann an versenkbare Poller gedacht sein, welche dieselbe Funktion haben können, wie die vorstehend beschriebenen Schranken.

Sowohl die Zugangswarnung als auch die Zugangsverhinderung können, wie teilweise bereits angedeutet, als Puffer ausgestattet sein, welcher die kinetische Energie eines fehlerhaften Shuttles, welches durch die geschlossene Zugangswarnung oder Zugangsverhinderung in das Senkrechtförderer-Modul einzufahren droht, teilweise oder vollständig aufnimmt, und das Shuttle somit verlangsamt oder zum Stehen bringt. Mit dieser Funktion, die derjenigen eines vom Bahnverkehr her bekannten Prellbocks gleicht, kann verhindert werden, dass eine im Senkrechtförderer-Modul befindliche Bedienperson zu Schaden kommt.

Es kann daran gedacht sein, Poller vorzugsweise dann einzusetzen, wenn die Puffer-Funktion im Vordergrund steht, während Schranken vorzugsweise dann eingesetzt werden, wenn die Warn-Funktion gegenüber der Bedienperson im Vordergrund steht.

Es kann also daran gedacht sein, dass die erste Barriere ausgewählt ist aus einer Gruppe umfassend Zugangs-Verhinderungs-Einrichtungen wie beispielsweise Türen, Tore oder Gitter und Zugangs-Warn-Einrichtungen wie beispielsweise Schranken oder Poller. Einzelheiten hierzu wurden vorstehend beschrieben.

Alternativ zu den vorstehenden Ausführungen hinsichtlich Zugangswarnung und Zugangsverhinderung kann daran gedacht sein, dass insbesondere die zweite Barriere ausschliesslich als Puffer ausgestaltet ist, welcher die fehlerhafte Einfahrt eines Shuttles in das Senkrechtförderer-Modul unterbindet, aber keine besondere Warn- oder Zutritts-Verhinderungs-Funktion für eine Bedienperson umfasst.

Sind die erste und die zweite Barriere separate und miteinander gekoppelte Einheiten, so kann an zahlreiche Varianten der Kopplung gedacht sein. Wie weiter vorne bereits erwähnt, handelt es sich hierbei vorzugsweise stets um zumindest eine erste und zumindest eine zweite Barriere, welche sich im Wesentlichen auf Höhe derselben Regalebene befinden.

Es kann daran gedacht sein, dass die Barrieren mechanisch miteinander gekoppelt sind. Zur Kopplung kann ein Getriebe vorhanden sein, wobei an beliebige Getriebe-Bauweisen, beispielsweise Koppelgetriebe, Zugmittelgetriebe, etc. gedacht sein kann. Ein solches Getriebe kann die beiden Barrieren derart miteinander koppeln, dass eine Bewegung der einen Barriere zwangsweise zur gewünschten Bewegung der anderen Barriere führt und/oder umgekehrt.

Eine mechanische Kopplung kann den Vorteil bewirken, dass die Zwangsführung, welche beispielsweise durch ein Koppelgetriebe vorherrscht, beispielsweise ein unter Umständen für die Bedienperson gefährliches gleichzeitiges Öffnen der ersten und zweiten Barriere sehr effektiv verhindert.

Weiterhin kann daran gedacht sein, dass die Barrieren elektronisch miteinander gekoppelt sind. Hierbei ist insbesondere an eine datentechnische Kopplung gedacht. In diesem Fall kann über eine Lagersteuerung oder dergleichen gewährleistet sein, dass eine Bewegung der einen Barriere zwangsweise zur gewünschten Bewegung der anderen Barriere führt und/oder umgekehrt.

Eine elektronische Kopplung kann mit geringem Aufwand implementiert werden. Dies gilt insbesondere, weil Shuttle-Lager heutzutage üblicherweise über einen hohen Automatisierungsgrad verfügen, und somit die notwendige Hardware meist bereits vorhanden ist. Eine elektronische Kopplung kann somit auf einfache Weise in Software implementiert werden.

Ferner kann daran gedacht sein, dass die Barrieren über einen geteilten Schlüssel miteinander gekoppelt sind.

Sind die Barrieren über einen geteilten Schlüssel miteinander gekoppelt, so wird dieser Schlüssel benötigt, um zumindest eine Positionsänderung jeder der Barrieren zu bewerkstelligen, d.h. für die Bewegung von der geschlossenen in die offene Position und/oder umgekehrt. Hierbei ist jeweils derselbe Schlüssel nötig.

Unter einem Schlüssel wird hierbei ein Öffnungs- oder Schaltelement verstanden, dessen Wirkprinzip beispielsweise mechanisch, elektrisch oder magnetisch sein kann.

Vorzugsweise existiert für derart gekoppelte Barrieren nur ein einziger passender Schlüssel. Existieren mehrere baugleiche Schlüssel, was bei grossen Shuttle-Systemen mit einer grossen Anzahl an Barrieren nicht immer vermieden werden kann, so kann dafür gesorgt sein, dass jedenfalls in unmittelbarer Nähe zu einer bestimmten Barriere kein zweiter passender Schlüssel existiert. Beispielsweise kann daran gedacht sein, dass benachbarte Barrieren, welche sich auf den unmittelbar oberhalb und unterhalb angrenzenden Regalebenen befinden, nicht mit dem gleichen Schlüssel bedient werden. Eine ähnliche Situation ist von Autos bekannt: Obwohl Funkschlüssel von Autos nicht einzigartig sind, sondern derselbe Schlüssel häufig mehrere Autos öffnen kann, ist die Wahrscheinlichkeit, ein zweites zum eigenen Schlüssel "passendes" Auto zu finden, sehr gering.

Sind die Barrieren über einen geteilten Schlüssel miteinander gekoppelt, so sind sie vorzugsweise derart eingerichtet, dass die erste Barriere, welche in Betriebslage geschlossen ist, nur geöffnet werden kann, wenn die zweite Barriere zuvor mit dem Schlüssel oder mit Hilfe des Schlüssels in die geschlossene Position bewegt wurde. Vorzugsweise wird der Schlüssel benötigt, um die erste Barriere in die offene Position zu bewegen, wobei der Schlüssel vorzugsweise erst dann verfügbar oder funktionsfähig ist, wenn die zweite Barriere mit dem Schlüssel oder mit Hilfe des Schlüssels in die geschlossene Position bewegt wurde. Die vorstehend geschilderte Funktionsweise der gekoppelten Barrieren mit geteiltem Schlüssel können durch die Anordnung von Schlössern, wie nachstehend beschrieben, erfüllt werden.

An oder nahe der ersten und der zweiten Barriere ist vorzugsweise ein Schloss angeordnet. Hierbei handelt es sich vorzugsweise um eine Einrichtung, welche den Schlüssel aufnehmen und festhalten kann, und welche den Schlüssel nur unter bestimmten Voraussetzungen freigibt. Einerseits kann an weit verbreitete Bauformen wie Bart- oder Zylinderschlösse gedacht sein. Handelt es sich bei dem Schlüssel, also dem weiter oben definierten Öffnungs- oder Schaltelement hingegen um ein magnetisch oder andersartig arbeitendes Bauteil, welches in Form einer Kreditkarte, eines Transponders, oder in anderer Form vorliegen kann, so ist das Schloss vorzugsweise eingerichtet, dieses Öffnungs- oder Schaltelement vorübergehend festzuhalten.

Unabhängig von der Bauart des Schlosses und des zugehörigen Schlüssels ist vorzugsweise beiden Barrieren jeweils ein Schloss zugeordnet, wobei bevorzugt nur ein einziger Schlüssel vorhanden ist, welcher beide Schlösser bedient. Sind beispielsweise mehrere zweite Durchgänge vorhanden, welche von mehreren zweiten Barrieren versperrt sein können, so kann diesen gemeinsam ein einziges Schloss zugeordnet sein. Analoges gilt für den Fall, dass mehrere erste Barrieren zum Versperren mehrerer erster Durchgänge vorhanden sind.

In allen Fällen kann daran gedacht sein, dass die - vorzugsweise genau zwei - Schlösser in Bezug auf die von ihnen abhängigen Barrieren arbeiten wie bekannte Schlösser mit Schliess-Zwang, die beispielsweise von Schliessfächern und Tresoren bekannt sind. Der Schliess-Zwang wird einem Ausführungsbeispiel der vorliegenden Erfindung gemäss so implementiert, dass die betreffende Barriere, in deren Schloss sich der Schlüssel befindet, geschlossen sein muss, um den Schlüssel herausziehen zu können. Ist nur ein Schlüssel für beide Schlösser vorhanden, so ergibt sich zwangsläufig, dass zu jedem Zeitpunkt maximal eine der Barrieren, also beispielsweise die oder alle erste(n) Barriere(n), geöffnet sein können. Jede Barriere kann schliesslich nur dann geöffnet sein, wenn der Schlüssel in dem dieser Barriere zugeordneten Schloss steckt, weshalb die jeweils andere(n) Barriere(n) geschlossen sein müssen. Sowohl der Vorgang des Öffnens einer Barriere als auch der Verbleib einer Barriere in der geöffneten Position erfordert vorzugsweise, dass sich der Schlüssel in dem dieser Barriere zugeordneten Schloss befindet.

Als Schlösser kommen beispielsweise auch bekannte Schlüsselschalter in Betracht, weitere Alternativen sind denkbar. Es muss vorzugsweise lediglich sichergestellt sein, dass der Schlüssel nur dann abgezogen werden kann bzw. im Allgemeinen nur dann vom Schloss freigegeben wird, wenn die zum Schloss gehörende(n) Barriere(n) geschlossen ist(sind). Gleichzeitig muss vorzugsweise sichergestellt werden, dass eine in der geschlossenen Position befindliche Barriere nur nach Freigabe durch Einsatz des Schlüssels in die offene Position bewegt werden kann.

In sämtlichen vorbeschriebenen Fällen ist der Schlüssel vorzugsweise Hardware, d.h. ein materiell verwirklichtes Bauteil, welches die Bedienperson in irgendeiner Weise in die Schlösser beispielsweise einbringen, einstecken, einlegen oder einschieben kann.

Zu den vorstehend beschriebenen Ausführungsformen sind zahlreiche Varianten und Abwandlungen denkbar, welche auch miteinander kombiniert werden können. Nachfolgend sind nur einige dieser denkbaren Abwandlungen und Varianten aufgeführt.

Erstens kann, wie bereits beschrieben, grundsätzlich daran gedacht sein, dass das Senkrechtförderer-Modul auf Höhe zumindest einer der Regalebenen, einen ersten und einen zweiten Durchgang umfasst, wobei die erste Barriere eingerichtet ist, den ersten Durchgang freizugeben oder zu versperren, und wobei die zweite Barriere eingerichtet ist, den zweiten Durchgang freizugeben oder zu versperren. Der erste Durchgang ist üblicherweise in Betriebslage verschlossen, und gewährt einer Bedienperson nur im Falle einer Störung im Senkrechtförderer-Modul Zugang. Der zweite Durchgang wird in Betriebslage von den Shuttles zur Einfahrt in das Senkrechtförderer-Modul genutzt.

Zu dieser grundsätzlichen Konfiguration sind zahlreiche Abwandlungen denkbar.

Zunächst kann das Senkrechtförderer-Modul mehrere erste und/oder mehrere zweite Durchgänge umfassen. Beispielsweise können zwei zweite Durchgänge vorhanden sein, wenn das Senkrechtförderer-Modul zwei Übergabeplätze umfasst, wobei jeder der zweiten Durchgänge den Shuttles Zugang zu einem der beiden Übergabeplätze gewährt.

Zwei oder mehr erste Durchgänge gewähren einer Bedienperson, im Falle einer Störung an mehreren Stellen und/oder zu mehreren, insbesondere auf derselben Höhe befindlichen Abschnitten des Senkrechtförderer-Moduls Zutritt. Bei einem Senkrechtförderer-Modul mit zwei Übergabeplätzen und einem zwischen diesen Übergabeplätzen verkehrenden Senkrechtförderer kann beispielsweise daran gedacht sein, jedem Übergabeplatz einen ersten Durchgang zuzuordnen.

Auf diese Weise kann eine Bedienperson abhängig davon, auf welchem der Übergabeplätze eine Störung vorliegt, unmittelbar zu diesem Übergabeplatz gelangen. Die Störung kann beispielsweise eine verdrehte oder gebrochene Palette oder dergleichen sein. Statt dem Übergabeplatz kann allgemein an den Abschnitt des Senkrechtförderer-Moduls gedacht sein.

Zweitens können einem der Durchgänge oder mehreren oder allen Durchgängen jeweils mehr als eine Barriere zugeordnet sein. So kann daran gedacht sein, einander gegenüberliegende und symmetrisch bewegliche Schranken oder Türen oder Tore einzusetzen. Neben zwei oder mehr gleichartigen Barrieren je Durchgang kann auch daran gedacht sein, den Durchgängen mehrere verschiedenartige Barrieren zuzuordnen. Beispielsweise können einem einzigen Durchgang sowohl eine versenkbare Barriere, die beispielsweise senkrecht eingefahren oder eingeklappt werden kann, als auch eine Schranke oder Gittertür oder dergleichen zugeordnet sein. Die versenkbare Barriere kann als Puffer dienen, um ein fehlerhaftes Shuttle im Notfall zum Stillstand zu bringen, während eine Gittertür oder dergleichen als Zugangsverhinderung dient. Weitere Alternativen umfassend zwei oder mehr verschiedenartige Barrieren zum Versperren desselben Durchgangs sind denkbar.

Vorzugsweise werden sämtliche auf derselben Höhe befindliche ersten und zweiten Barrieren eines Senkrechtförderer-Moduls in der bereits beschriebenen Weise miteinander gekoppelt. Sind also beispielsweise zwei erste Barrieren vorhanden, so müssen sämtliche am betreffenden Senkrechtförderer-Modul vorhandenen zweiten Barrieren geschlossen sein, bevor eine der ersten Barrieren geöffnet werden kann.

Drittens kann auch daran gedacht sein, erste und/oder zweite Barrieren auf unterschiedlichen, insbesondere benachbarten Regalebenen miteinander zu koppeln.

Aus verschiedenen Gründen kann daran gedacht sein, dass die Kopplung zwischen der zumindest einen ersten und der zumindest einen zweiten Barriere nicht nur derart besteht, dass die ersten und zweiten Barrieren eines Senkrechtförderer-Moduls gekoppelt sind, welche sich auf derselben Höhe, nämlich auf Höhe genau einer der Regalebenen befinden. Dies kann beispielswiese auf Grund der Ausgestaltung der Barrieren, welche nicht zwingend als Zutrittsverhinderung ausgestaltet sein müssen, oder auf Grund des Aufbaus des Regalbaus, welcher womöglich ein vertikales Hindurchstrecken von Gliedmassen erlaubt und/oder mit sehr niedriger Regalebenen-Höhe von deutlich unter zwei Metern ausgeführt sein kann, oder aus anderen Gründen angedacht sein.

Stattdessen kann beispielsweise daran gedacht sein, dass sowohl diejenigen zweiten Barrieren des Senkrechtförderer-Moduls, welche an dieselbe Regalebene angrenzen wie die erste Barriere, mit dieser ersten Barriere gekoppelt sind, als auch diejenigen zweiten Barrieren, welche auf der darunter liegenden und/oder der darüber liegenden Regalebene.

So kann eine Verletzungsgefahr für eine Bedienperson ausgeschlossen werden, welche sich auf Höhe einer bestimmten Regalebene in das Senkrechtförderer-Modul begeben hat, und für die Gefahr besteht, durch ein Shuttle verletzt zu werden, welches auf der darüber- oder darunter liegenden Regalebene in das Senkrechtförderer-Modul, insbesondere dessen Übergabeplatz, einfährt.

Umfasst der Regalbau des Shuttle-Systems Regalebenen mit unterschiedlicher Höhe (d.h. vertikaler Ausdehnung), so kann die vorbeschriebene Regalebenen-übergreifende Kopplung nur für diejenigen Regalebenen vorgesehen sein, bei denen diese Art der Kopplung auf Grund der geringen Höhe aus Sicherheitsgründen nötig erscheint. Massgeblich kann hierbei sein, ob Bedienpersonen auf Grund der üblichen Körpergrösse von einem gegebenen Übergabeplatz oder dergleichen aus beispielsweise in einen darüber angeordneten Übergabeplatz der darüber liegenden Regalebene eingreifen können.

Es kann alternativ auch daran gedacht sein, sämtliche zweiten Barrieren eines Senkrechtförderer-Moduls gleichzeitig zu schliessen, wenn die Bedienperson durch eine der ersten Barrieren in das Senkrechtförderer-Modul eintreten will, d.h. bevor eine der ersten Barrieren geöffnet wird. Dadurch wird beispielsweise verhindert, dass die Bedienperson im Senkrechtförderer-Modul durch Hindurchstrecken von Gliedmassen in gefährdete Bereiche, aber auch durch herunterfallende bewegliche Teile, beispielsweise herunterfallende Ladung eines viele Regalebenen weiter oben in das Senkrechtförderer-Modul einfahrenden Shuttles, gefährdet wird. Es kann daran gedacht sein, dass sämtliche innerhalb eines Senkrechtförderer-Moduls befindlichen fahrtüchtigen Shuttles dieses Senkrechtförderer-Modul verlassen müssen, bevor sämtliche zweiten Barrieren geschlossen werden und eine der ersten Barrieren geöffnet wird.

Weiter alternativ kann daran gedacht sein, vor dem Öffnen einer ersten Barriere auf einer bestimmten Höhe diejenigen zweiten Barrieren zu schliessen, welche auf derselben Höhe oder weiter oben angeordnet sind. Dadurch wird eine Verletzung der Bedienperson durch herunterfallende bewegliche Teile verhindert. Gegebenenfalls können auch diejenigen zweiten Barrieren geschlossen werden, welche sich direkt unterhalb der Regalebene befinden, auf deren Höhe die Bedienperson in das Senkrechtförderer-Modul eintreten will. Somit wird zusätzlich eine Verletzungsgefahr beim unachtsamen nach-unten-Strecken von Gliedmassen verhindert. Alle zweiten Barrieren des Senkrechtförderer-Moduls, welche noch tiefer angeordnet sind, können hingegen geöffnet bleiben. Dadurch können beispielsweise Shuttles die in diese tiefer angeordneten Übergabeplätze ein- und ausfahren, in Betrieb bleiben. Diese Shuttles können Ladungsträger, Ladegüter oder dergleichen von den tiefer angeordneten Übergabeplätzen übernehmen oder an diese übergeben, so dass die Lager-Effizienz nicht unnötig noch weiter herabgesetzt wird, während weiter oben eine Bedienperson in das Senkrechtförderer-Modul eintritt.

Viertens kann daran gedacht sein, dass die ersten und gegebenenfalls die zweiten Barrieren vertikal mehrere Regalebenen übergreifen:
Es kann angedacht sein, dass die erste Barriere, welche sich auf Höhe einer an das Senkrechtförderer-Modul angrenzenden Regalebene befindet, so ausgestaltet ist, dass sie der Bedienperson nicht nur Zugang zu demjenigen Abschnitt des Senkrechtförderer-Moduls gewährt, welcher ebenfalls auf Höhe der angrenzenden Regalebene liegt, sondern zusätzlich auch zu einem weiteren Abschnitt, welcher darüber oder darunter liegt. Es kann auch angedacht sein, dass die erste Barriere so ausgestaltet ist, dass sie der Bedienperson Zutritt zu beispielsweise insgesamt drei Abschnitten gewährt, welche darüber und/oder darunter liegen können. Derartige erste Barrieren können beispielsweise durch Türen oder Tore entsprechender Höhe (d.h. vertikaler Ausdehnung) bereitgestellt werden.

Eine solche erste Barriere, die vertikal mehrere Regalebenen übergreift, kann vorteilhaft sein, wenn die Regalebenen eine geringe Höhe von beispielsweise deutlich unter zwei Metern aufweisen, um einer üblicherweise bis zu etwa zwei Meter hohen Bedienperson einen komfortablen Zugang zu ermöglichen. Wird eine solche vertikal mehrere Regalebenen übergreifende erste Barriere eingesetzt, so ist üblicherweise das Shuttle-System so eingerichtet, dass auf Höhe aller Abschnitte des Senkrechtförderer-Moduls, zu denen die vorgenannte mehrere Regalebenen vertikal übergreifende erste Barriere der Bedienperson Zugang gewährt, die jeweils zweite Barriere geschlossen ist, bevor die Bedienperson eintreten kann. Zusätzlich können weitere zweite Barrieren geschlossen werden, welche sich weiter oben und/oder weiter unten befinden, was vorstehend bereits mit Hinblick auf andere Ausführungsvarianten der Erfindung ausführlich beschrieben wurde.

Ist die zumindest eine erste Barriere so ausgestaltet, dass sie vertikal mehrere Regalebenen übergreift, so kann in diesen Regalebenen auch vorgesehen sein, dass die auf derselben Höhe befindliche zumindest eine zweite Barriere ebenfalls vertikal mehrere Regalebenen übergreift.

Die vorgenannten Varianten betreffend vertikal mehrere Regalebenen übergreifende erste und zweite Barrieren können für sämtliche Barrieren eines Senkrechtförderer-Moduls gelten, die auf derselben Höhe angeordnet sind.

Die vorstehend beschriebene Variante umfassend vertikal mehrere Regalebenen übergreifende erste und ggf. zweite Barrieren ist insbesondere dann angedacht, wenn eine Bühne oder dergleichen nicht angrenzend an jede Regalebene vorgesehen ist, sondern in vertikaler Richtung beispielsweise nur auf Höhe jeder zweiten oder dritten Regalebene. Details zu derart angeordneten Bühnen oder dergleichen sind weiter unten beschrieben.

Weiter oben wurden Barrieren in Form von Zugangsverhinderungen und Zugangswarnungen bereits ausführlich geschildert. Für die Barrieren sämtlicher Ausführungsbeispiele der vorliegenden Erfindung sind weiterhin verschiedenste Bauweisen und Ausführungen denkbar, von denen nachstehend einige beschrieben sind.

Ist die Barriere in Form eines Tors oder einer Tür ausgeführt, so kann diese aus biegesteifem oder biegeschlaffem Material oder aus einer Kombination beider Materialien gefertigt sein. Metall, Holz und Kunststoff können als biegesteifes Material zum Einsatz kommen. Als biegeschlaffes Material können Tücher oder Netze eingesetzt werden. Varianten sind denkbar. Eine Tür oder ein Tor aus einem biegeschlaffen Material kann einen starren Rahmen aufweisen, welcher das biegeschlaffe Material stützt. Das biegeschlaffe Material kann eingerichtet sein, beispielsweise die kinetische Energie eines fehlerhaft einfahrenden Shuttles aufzunehmen und kann somit als Puffer wirken.

Zumindest eine der Barrieren kann auch als horizontal verschiebbares Scherengitter oder beispielsweise als vertikal aufschiebbares oder aufrollbares Scherengitter ausgestaltet sein. Derartige Scherengitter können durch den Scheren-Mechanismus entlang der Richtung, in welcher ein Öffnen oder Schliessen erfolgt, in die Länge gezogen oder zusammengeschoben werden. Die Länge von Scherengittern kann also verändert werden.

Ob eine Barriere als Puffer wirkt, d.h. ein fehlerhaft in das Senkrechtförderer-Modul einfahrendes Shuttle abbremsen oder sogar zum Stillstand bringen kann, hängt von der konkreten Materialauswahl und der Bauweise ab. Ein entsprechend starkes Netz mit einem ausreichend starken Rahmen kann als Puffer dienen, ebenso wie ein massiver Poller oder dergleichen.

Werden die Barrieren nicht manuell geöffnet oder geschlossen, so steht jede Barriere vorzugsweise in Wirkverbindung mit einem Antrieb, welcher die Barriere zwischen der geöffneten und geschlossenen Position hin- und her bewegen kann. Jeder Barriere können ein oder mehrere Antriebe zugeordnet sein. Ferner kann daran gedacht sein, mehreren Barrieren einen gemeinsamen Antrieb zuzuordnen. Als Antriebe kommen Motoren, beispielsweise Elektromotoren in Betracht. Ferner kann an hydraulische oder pneumatische Antriebe gedacht sein.

Ein manuelles Betätigen, d.h. Öffnen oder Schliessen von zumindest einer Barriere kann insbesondere als optionale Möglichkeit in Betracht kommen. Vorzugsweise werden die Barrieren jedoch automatisch, d.h. über einen Antrieb, betätigt. Ein manuelles Betätigen kommt hierbei vornehmlich als optionale Möglichkeit für die erste Barriere in Betracht, während die zweite Barriere meist automatisch betätigt wird.

Um den Zustand der Barrieren festzustellen, können geeignete Sensoren vorhanden sein. Es kann an Sensoren gedacht sein, welche feststellen, ob die betreffende Barriere sich in der geschlossenen Position befindet. Zusätzlich oder alternativ kann an Sensoren gedacht sein, welche feststellen, ob die betreffende Barriere sich in der offenen Position befindet. Zusätzlich oder alternativ kann an Sensoren gedacht sein, welche feststellen, ob die Barriere eine Endlage erreicht hat, oder ob sie sich weder in der offenen noch in der geschlossenen Position befindet.

Um die Barrieren in einer bestimmten Position zu halten, können geeignete Mittel vorhanden sein. Insbesondere kann an Zuhaltungen gedacht sein, beispielsweise an Magnetzuhaltungen. Diese können beispielsweise als Zuhaltung mit Sicherheitsschalter ausgeführt sein, um einerseits die betreffende Barriere geschlossen zu halten, und andererseits einen Alarm auszulösen oder Bestandteile des Shuttle-Systems in einen sicheren Zustand zu versetzen, falls der Sicherheitsschalter auf Grund einer unerwartet geöffneten Barriere auslöst. Alternativ kann der Sicherheitsschalter genutzt werden, um eine bestimmte Aktion nur dann zu ermöglichen, wenn die betreffende Barriere geschlossen ist.

Beispielsweise kann die zweite Barriere eine Zuhaltung mit Sicherheitsschalter umfassen. Das betreffende Senkrechtförderer-Modul kann eingerichtet sein, die Öffnung der ersten Barriere erst zu starten, wenn der Sicherheitsschalter meldet, dass die zweite Barriere geschlossen ist.

Auch die Einsatz-Zwecke und die Wirkungen der Barrieren können im Hinblick auf die individuellen Anforderungen des betreffenden Shuttle-Systems angepasst sein. Hierbei kann der von der jeweiligen Barriere bei Bedarf verschlossene Durchgang in derartige Überlegungen mit einbezogen werden. Ist der zweite Durchgang, welcher einem Shuttle die Einfahrt in das Senkrechtförderer-Modul erlaubt, nur wenig breiter als das Shuttle, so kann ein horizontal verschiebbares Sektionaltor oder dergleichen bereits dann, wenn es sich nur in geringem Umfang, beispielsweise um wenige Zentimeter, geschlossen hat, die Einfahrt eines Shuttles verhindern. Dies kann entweder durch die Wirkung eines nur teilweise geschlossenen Sektionaltors oder dergleichen als Puffer bewerkstelligt werden, welcher bereits bei einer nur teilweise überlappenden Kollision zwischen Shuttle und Barriere eine ausreichende Pufferwirkung entfaltet. Weiterhin kann dies bewerkstelligt werden, indem ein nur teilweise geschlossenes Sektionaltor oder dergleichen von einem Sensor eines fehlerhaft herannahenden Shuttles als Hindernis erkannt wird, und das Shuttle daraufhin selbsttätig abbremst. Fährt eine Tür oder ein Tor jedoch beispielsweise von oben herunter, um den zweiten Durchgang zu versperren, so tritt diese Sperr-Wirkung unter Umständen erst auf, wenn das Tor oder die Tür bereits weitgehend geschlossen sind.

Ein Poller kann seine Funktion als Puffer abhängig von einer Bodenfreiheit des Shuttles unter Umständen bereits ausüben, wenn er nur zu einem geringen Grad ausgefahren ist.

Jede beliebige auch nur teilweise geschlossene Barriere kann von einer Bedienperson als Zugangswarnung aufgefasst werden, und somit eine Warnfunktion bereits dann ausüben, wenn sie nur teilweise geschlossen ist.

Die Zugangsverhinderungs-Funktion kann üblicherweise jedoch erst dann mit ausreichender Sicherheit ausgeübt werden, wenn die entsprechende, als Zugangsverhinderung wirkende Barriere weitgehend oder vollständig geschlossen ist. Selbst ein geringer Öffnungsgrad einer als erste Barriere dienenden Tür kann es einer kleinen und/oder gelenkigen Bedienperson unter Umständen noch erlauben, durch den nicht verschlossenen Teil des Durchgangs hindurchzutreten, um in das Senkrechtförderer-Modul zu gelangen.

Üblicherweise verschliessen die Barrieren vor allem die ersten und zweiten Durchgänge. Je nach Anordnung des ersten Durchgangs kann aber auch daran gedacht sein, dass eine als Sektionaltor ausgebildete Barriere nicht nur den ersten Durchgang des betreffenden Übergabeplatzes verschliesst, sondern auch etwaige bestehende Öffnungen zwischen dem Übergabeplatz und einem unmittelbar oberhalb gelegenen Übergabeplatz, welcher an die nächsthöhere Regalebene angrenzt. Zusätzlich oder alternativ kann angedacht sein, dass das Sektionaltor auch einen dritten Durchgang zwischen dem Übergabeplatz und dem Senkrechtförderer verschliessen kann. Dieser dritte Durchgang kann sich gegenüber dem ersten Durchgang befinden. Es kann jedoch auch an Ausführungsformen gedacht sein, bei denen nur der erste und der zweite Durchgang durch eine Barriere verschliessbar sind.

Sämtliche erwähnten Aktoren und Sensoren können mit einer übergeordneten Lagersteuerung verbunden. Dies ist bei Shuttle-Systemen üblich und bekannt, da derartige Shuttle-Systeme häufig einen hohen Grad an Automatisierung aufweisen.

**Neben dem vorstehend beschriebenen Shuttle-System umfasst die vorliegende Erfindung auch ein nachstehend beschriebenes Verfahren zum Beheben einer Störung in einem Senkrechtförderer-Modul eines Shuttle-Systems. Aspekte, Vorteile und Details, welche nur in Bezug auf das Shuttle-System beschrieben, wurden, gelten gleichermassen auch für das Verfahren, und umgekehrt.**

Ein Verfahren zum Beheben einer Störung in einem Senkrechtförderer-Modul eines Shuttle-Systems, welches ausgestaltet sein kann, wie vorstehend beschrieben, umfasst folgende Schritte:
- Schliessen der zumindest einen zweiten Barriere
- Öffnen der zumindest einen ersten Barriere.

Das vorgenannte Schliessen und Öffnen der Barrieren kann sich auf diejenigen Barrieren beziehen, welche sich auf Höhe derjenigen Regalebene befinden, auf welcher sich auch die zu beseitigende Störung im Senkrechtförderermodul befindet. Dies kann auch für alle nachstehend erläuterten Merkmale und Details gelten, selbst wenn nicht jeweils ausdrücklich erwähnt wird, dass die jeweils besprochenen Barrieren und insbesondere auch die zu beseitigende Störung sich auf Höhe derselben Regalebene befinden.

Vorzugsweise erfolgt das Schliessen und Öffnen mittels eines entsprechenden Antriebs. Ein zumindest teilweise manuell erfolgendes Schliessen und Öffnen ist jedoch von der vorliegenden Erfindung ebenfalls umfasst.

Vorzugsweise erfolgt zunächst das Schliessen der zweiten Barriere. Das Öffnen der ersten Barriere beginnt vorzugsweise erst, nachdem die zweite Barriere zumindest ein Stück weit, vorzugsweise vollständig geschlossen wurde.

Vor dem Öffnen der zumindest einen ersten Barriere kann eine Plattform oder eine Kabine des Senkrechtförderers auf eine Höhe bewegt werden, welche ein Hinabstürzen einer über die erste Barriere in das Senkrechtförderer-Modul eingetretenen Bedienperson in einen Senkrechtförderer-Schacht verhindert. Die Plattform kann auch ein Lastaufnahmemittel, beispielsweise eine Teleskopgabel umfassen oder im Wesentlichen aus einem Lastaufnahmemittel gebildet sein. Vorzugsweise wird die Plattform oder die Kabine auf eine solche Höhe gebracht, dass ein Abschnitt der Plattform oder Kabine, welcher üblicherweise eine Last wie beispielsweise einen Ladungsträger trägt, sich im Wesentlichen auf Höhe der angrenzenden Regalebene befindet. Somit wird effektiv verhindert, dass eine im Senkrechtförderer-Modul befindliche Bedienperson in den Schacht des Senkrechtförderers stürzt.

Umfasst das Senkrechtförderer-Modul zwei oder mehr Senkrechtförderer, so gelten alle vorstehenden Ausführungen analog für beide Senkrechtförderer. Beispielsweise werden vorzugsweise beide Plattformen oder Kabinen des Senkrechtförderers vor dem Öffnen der ersten Barriere auf eine Höhe bewegt, welche ein Hinabstürzen verhindert.

Es kann daran gedacht sein, dass etwaige funktionstüchtige Shuttles vor dem Öffnen der zumindest einen ersten Barriere das Senkrechtförderer-Modul verlassen. Hierbei kann es genügen, wenn diejenigen Shuttles das Senkrechtförderer-Modul verlassen, welche sich auf Höhe desselben Abschnitts befinden, wie die zu beseitigende Störung. Alternativ könnte eine Bedienperson, die über die erste Barriere in das Senkrechtförderer-Modul gelangt, ein möglicherweise noch dort befindliches funktionstüchtiges Shuttle an einem Shuttle-eigenen Not-Aus-Knopf stromlos schalten oder zumindest derart ausschalten, dass von diesem Shuttle keine Gefahr für die Bedienperson mehr ausgeht. Vorzugsweise sind die Senkrechtförderer-Module gemäss Ausführungsbeispielen der vorliegenden Erfindung zumindest teilweise einsehbar, auch bevor die erste Barriere geöffnet wird. Es kann also auch daran gedacht sein, dass eine Bedienperson zunächst visuell erfasst, ob sich ein Shuttle innerhalb Senkrechtförderer-Moduls auf derselben Höhe wie die zu beseitigende Störung befindet. Ist dies der Fall, so kann daran gedacht sein, dass das betreffende Shuttle ferngesteuert ausgeschaltet werden kann.

Im Senkrechtförderer-Modul befindliche Shuttles, die nicht mehr funktionstüchtig sind, können aus Gründen der Vorsicht ebenfalls vorzugsweise auf eine der vorgenannten Weisen ausgeschaltet werden, sobald die Bedienperson sich Zutritt zu dem Senkrechtförderer-Modul verschafft. Wie bereits mehrfach erwähnt, kann daran gedacht sein, dass dies nur für Shuttles gilt, die sich auf dem Abschnitt oder zumindest auf Höhe des Abschnitts befinden, zu dem sich die Bedienperson zwecks Störungsbeseitigung Zugang verschaffen muss.

Alternativ oder zusätzlich kann daran gedacht sein, dass die zweite Barriere eingerichtet ist, ein in dem Senkrechtförderer-Modul befindliches Shuttle nach dem Schliessen der zweiten Barriere in seiner Bewegungsfreiheit so einzuschränken, dass eine Gefahr für die Bedienperson minimiert wird oder entfällt. Dies kann einerseits dadurch erfolgen, dass die zweite Barriere oder ein mit ihr in Wirkverbindung stehendes Element ähnlich dem Wirkprinzips eines Formschlusses die Bewegungsfreiheit des Shuttles einschränkt, letztlich also durch "Einsperren" des Shuttles. Weiterhin kann daran gedacht sein, dass die zweite Barriere oder ein mit ihr in Wirkverbindung stehendes Element tatsächlich eine Wirkverbindung, insbesondere eine formschlüssige Verbindung mit einem Bestandteil des Shuttles eingeht, um eine Bewegung des Shuttles und somit eine Gefährdung der Bedienperson zu verhindern. Neben dem "Einsperren" des Shuttles kann also auch an ein "Anketten" des Shuttles gedacht sein.

Sind die erste Barriere und die zweite Barriere separate Einheiten, welche miteinander gekoppelt sind, wie dies bereits mit Hinblick auf das Shuttle-System weiter oben beschrieben wurde, so kann das Verfahren folgende Schritte umfassen, welche vorzugsweise in der angegebenen Reihenfolge ausgeführt werden:
- Empfangen einer Zutrittsanforderung betreffend das Senkrechtförderer-Modul
- Schliessen der zumindest einen zweiten Barriere
- Öffnen der zumindest einen ersten Barriere, sobald die zweite Barriere dem Shuttle keinen Zugang zu dem zumindest einen Abschnitt des Senkrechtförderer-Moduls gewährt und/oder, sobald die zweite Barriere der Bedienperson den Zutritt zur angrenzenden Regalebene über das Senkrechtförderer-Modul verwehrt.

Auch im Rahmen der vorbeschriebenen Variante des Verfahrens kann daran gedacht sein, dass die Zutrittsanforderung und das darauffolgende Schliessen und Öffnen der Barrieren sich nicht auf sämtliche Barrieren des betreffenden Senkrechtförderer-Moduls beziehen, sondern nur auf die Barrieren, welche auf derselben Höhe liegen, wie die zu beseitigende Störung. Anders ausgedrückt kann daran gedacht sein, dass nur diejenigen Barrieren betroffen sind, welche an dieselbe Regalebene angrenzen bzw. auf Höhe derselben Regalebene angeordnet sind, wie ein Abschnitt des Senkrechtförderer-Moduls, in welchem die Störung vorliegt, und in den die Bedienperson eintritt.

Die Zutrittsanforderung kann beispielsweise erfolgen, indem die Bedienperson einen Knopf nahe derjenigen ersten Barriere drückt, über welche sie in das Senkrechtförderer-Modul eintreten möchte. Weiterhin kann die Zutrittsanforderung über einen nahe der vorgenannten Barriere installierten Schlüsselschalter erfolgen, welcher ebenfalls bereits beschrieben wurde. Alternativ kann die Zutrittsanforderung drahtlos über ein mobiles Gerät abgesetzt werden.

Mittels der Zutrittsanforderung teilt die Bedienperson einer Lagersteuerung den Zutrittswunsch mit, was einige oder sämtliche der nachstehenden Verfahrensschritte nach sich ziehen kann: Die Plattform oder Kabine kann, wie vorstehend bereits beschrieben, auf die Höhe der angrenzenden Regalebene gefahren werden. Funktionstüchtige Shuttles können das Senkrechtförderer-Modul verlassen. Weitere Verfahrensschritte sind als unmittelbare Folge des Zutrittswunschs denkbar. Beispielsweise kann daran gedacht sein, dass die Lagersteuerung, beispielsweise bis zur Behebung der Störung, keine Aufträge mehr vergibt, welche beinhalten, dass ein Shuttle zu dem betroffenen Senkrechtförderer-Modul fährt. Wie bereits mehrfach angedeutet kann dies vorzugsweise ausschliesslich für die Shuttles derjenigen Regalebene gelten, welche an den Abschnitt des Senkrechtförderer-Moduls angrenzen, in den die Bedienperson einzutreten gedenkt. Wie im Hinblick auf das Shuttle-System weiter oben beschrieben, kann aber auch daran gedacht sein, dass die vorstehenden Überlegungen nicht nur für die Regalebene gelten, auf deren Höhe die Störung vorliegt, sondern zusätzlich für entweder eine oder zwei oberhalb und/oder unterhalb befindliche Regalebenen, oder zusätzlich für sämtliche oberhalb dieser Regalebene befindlichen Regalebenen. Grundsätzlich kann an alle Verfahrensschritte gedacht sein, welche dazu beitragen, dass die Bedienperson das Senkrechtförderer-Modul sicher betreten kann.

Bei der vorstehend beschriebenen Verfahrens-Variante, bei welcher das Empfangen der Zutrittsanforderung als erster Schritt erfolgt, beginnt sich die erste Barriere vorzugsweise erst dann zu öffnen, wenn eine grundlegende SicherheitsAnforderung erfüllt ist, indem die zweite Barriere sich bereits so weit geschlossen hat, dass entweder das Shuttle an der Einfahrt gehindert oder der Bedienperson das Eintreten in die Regalebene verwehrt wird.

Es kann daran gedacht sein, dass nach dem Empfangen der Zutritts-Anforderung etwaige in dem Senkrechtförderer-Modul befindliche Shuttles und/oder etwaige auf dem Weg zu dem Senkrechtförderer-Modul befindliche Shuttles und/oder etwaige in der näheren Umgebung des Senkrechtförderer-Moduls befindliche Shuttles und/oder sämtliche auf der angrenzenden Regalebene befindliche Shuttles in den Stillstand versetzt werden.

Wie bereits mehrfach beschrieben, betrifft dies vorzugsweise nicht sämtliche Shuttles, sondern beispielsweise nur diejenigen, welche in der Regalebene verkehren, auf deren Höhe die zu beseitigende Störung liegt. Wie ebenfalls bereits mehrfach beschrieben können stets zusätzlich ein oder zwei darüber und/oder darunter liegende Regalebenen, d.h. insbesondere die dort verkehrenden Shuttles, "stillgelegt" werden, oder es können zusätzlich sämtliche darüber liegenden Regalebenen stillgelegt werden. Dies gilt sowohl für die unmittelbar vorstehend beschriebene Variante, als auch für die nachstehend beschriebenen Varianten.

Um die Effizienz des Shuttle-Systems während der Störungs-Behebung so wenig wie möglich herabzusetzen, kann daran gedacht sein, so wenige Shuttles wie möglich in den Stillstand zu versetzen. Insbesondere, wenn die zweite Barriere als Puffer und Zutrittsverhinderung wirkt, kann oftmals darauf verzichtet werden, viele der Shuttles in den Stillstand zu versetzen. Insbesondere kann daran gedacht sein, zu vermeiden, sämtliche auf der angrenzenden Regalebene befindliche Shuttles in den Stillstand zu versetzen. Dies kann jedoch in manchen Fällen oder bei manchen Ausführungsformen nötig sein.

Beispielsweise kann daran gedacht sein, dass nur etwaige in dem Senkrechtförderer-Modul befindliche Shuttles und ggf. etwaige auf dem Weg zu dem Senkrechtförderer-Modul befindliche Shuttles in den Stillstand versetzt werden, während weiter entfernt verkehrende Shuttles zu einem anderen Senkrechtförderer-Modul umgeleitet werden.

In diesem Zusammenhang kann "auf dem Weg befindlich" bedeuten, dass eine Entfernung zwischen dem betreffenden Shuttle und dem eine Störung aufweisenden Senkrechtförderer-Modul geringer ist als eine Entfernung zwischen diesem Shuttle und allen anderen verfügbaren Senkrechtförderer-Modulen.

Varianten des vorbeschriebenen Verfahrens betreffen vorzugsweise nur die Behebung einer Störung, welche von einem vollständig innerhalb des Senkrechtförderer-Moduls befindlichen Bauteil ausgelöst werden bzw. auf ein solches zurückgehen. Ein beispielsweise in einem Durchgang liegengebliebenes Shuttle, welches beispielsweise mit einem Teil der diesem Durchgang zugeordneten Barriere kollidiert sein kann, und sich noch teilweise auf dem an das Senkrechtförderer-Modul angrenzenden Fahrweg oder einem sonstigen Bestandteil der angrenzenden Regalebene befindet, ist vorzugsweise nicht von Varianten des erfindungsgemässen Verfahrens abgedeckt.

Sämtliche Ausführungsvarianten der vorliegenden Erfindung können bewirken, dass nur wenige oder sogar gar keine Shuttles während der Störungs-Behebung stillgelegt werden müssen. Insbesondere bei grossen Shuttle-Systemen, d.h. grossen Regalbauten mit zahlreichen Regalebenen, wirkt sich dieser Vorteil besonders positiv aus, weil in grossen Shuttle-Systemen sehr häufig irgendein Senkrechtförderer-Modul eine Störung aufweist. Würde deren Behebung stets eine Stilllegung des gesamten Regalbaus erfordern, so wären die Effizienz-Verlusten immens.

Bei sämtlichen Ausführungsformen der vorliegenden Erfindung kann es vorgesehen sein, dass innerhalb des Senkrechtförderer-Moduls mehrere Anschlagpunkte vorhanden sind, an denen sich eine Bedienperson mittels ihrer persönlichen Schutzausrüstung sichern kann. Es kann daran gedacht sein, auf Höhe jeder an das Senkrechtförderer-Modul angrenzenden Regalebene zumindest einen solchen Anschlagpunkt bereitzustellen.

Es sind zahlreiche Anordnungen der Treppen oder Leitern, Bühnen und sonstigen Einrichtungen denkbar, über welche eine Bedienperson, ohne die Regalebenen des Regalbaus zu betreten, zu einer der ersten Barrieren gelangen kann. Es ist auch nicht zwingend nötig, dass an jede Regalebene angrenzend eine Bühne vorhanden ist.

Vorzugsweise besteht jedoch angrenzend an jede Regalebene zumindest ein zweiter Durchgang zwischen Senkrechtförderer-Modul und Regalebene, so dass zweckmässigerweise bevorzugt auch angrenzend an jede Regalebene zumindest ein erster Durchgang und eine erste Barriere vorliegt. Entsprechend ist es bevorzugt vorgesehen, dass sich eine Bedienperson über eine entsprechende Bühne oder zumindest eine Leiter, einen Vorsprung oder dergleichen Zutritt zu über jeden dieser ersten Durchgänge in das Senkrechtförderer-Modul verschaffen kann.

In sämtlichen Ausführungsvarianten kann daran gedacht sein, eine, mehrere oder sämtliche zweiten Barrieren eines Senkrechtförderer-Moduls auch dann zu schliessen, wenn eine Bedienperson auf andere Weise als durch die erste Barriere Zugang zu dem Senkrechtförderer-Modul erlangt oder erlangen will. Beispielsweise könnte eine Reparatur oder Wartung eines unten im Senkrechtförderer-Modul befindlichen Antriebs nötig sein, welcher auf andere Weise als über eine erste Barriere zugänglich ist. Um beispielsweise eine Verletzung der Bedienperson durch fehlerbedingtes Herabstürzen von Ladung eines auf einer weiter oben gelegenen Ebene in das Senkrechtförderer-Modul einfahrenden Shuttles zu verhindern, können bei den vorbeschriebenen Wartungsarbeiten oder in ähnlichen Situationen sämtliche zweiten Barrieren des betreffenden Senkrechtförderer-Moduls geschlossen werden. Zuvor können gegebenenfalls sämtliche Shuttles das betreffende Senkrechtförderer-Modul verlassen.

### Figurenbeschreibung

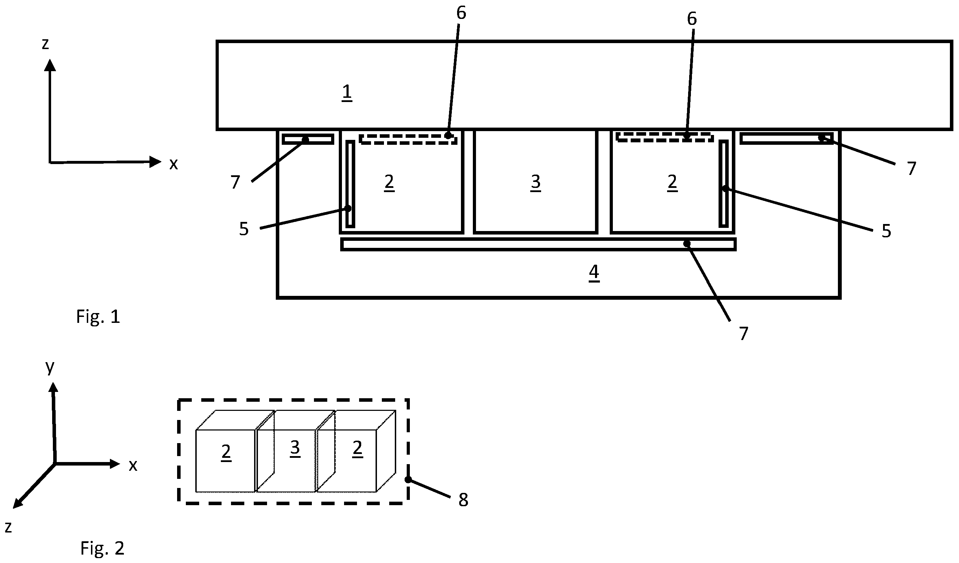

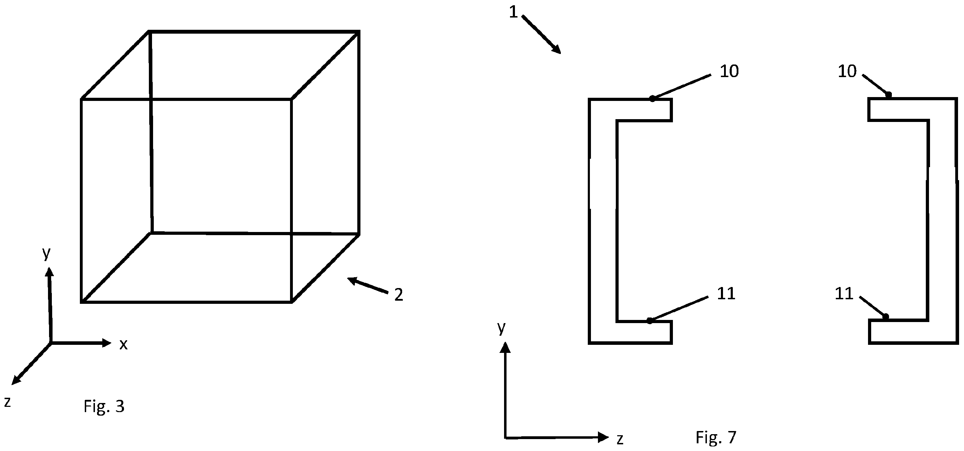

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in den Figuren 1 bis 6 und 8 bis 9 Ausführungsformen eines Senkrechtförderer-Moduls 8 oder Teile davon sowie in Figur 7 einen Fahrweg 1.

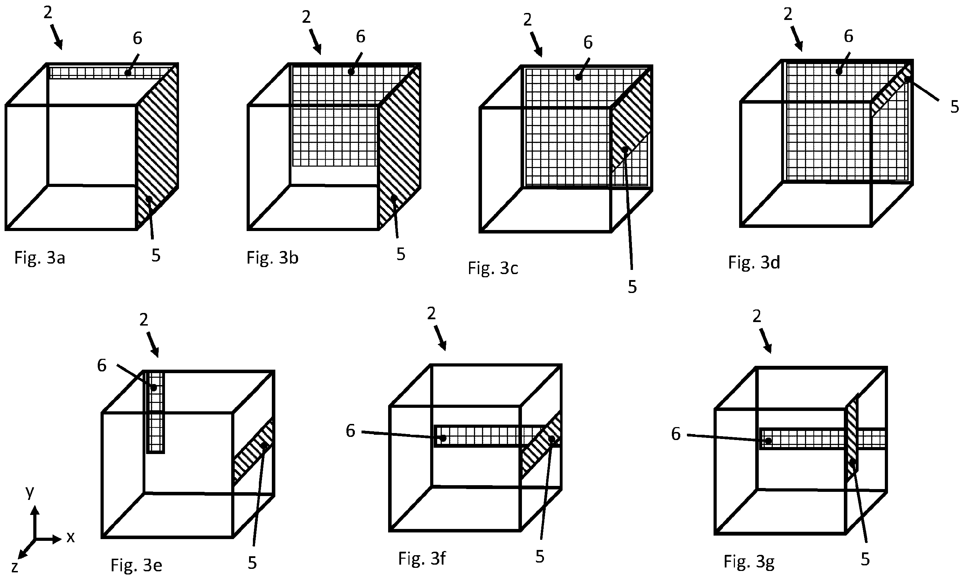

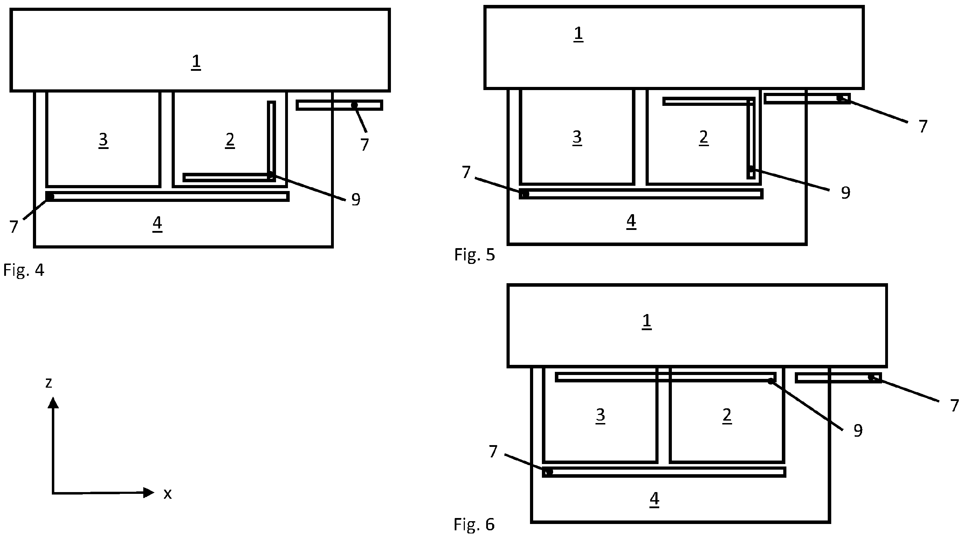

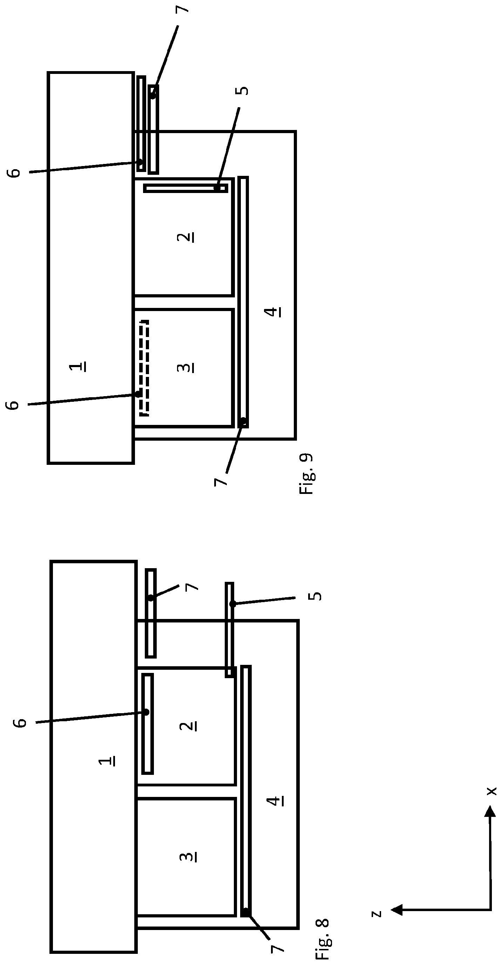

Links neben den Figuren 1, 2, 3 und 7 sowie links unten auf dem Zeichnungsblatt umfassend die Figuren 4 bis 6 und auf dem Zeichnungsblatt umfassend die Figuren 8 und 9 sowie auf den Zeichnungsblättern umfassend die Figuren 3a bis 3q sind jeweils die zugehörigen Koordinatenachsen dargestellt.

### Ausführungsbeispiel

In Figur 1 ist schematisch eine Draufsicht auf ein Senkrechtförderer-Modul 8 dargestellt, welches zwei Übergabeplätze 2 und einen Senkrechtförderer 3 sowie erste und zweite Barrieren 5, 6 umfasst. Angrenzend an das Senkrechtförderer-Modul 8 sind ein Fahrweg 1 und eine Bühne 4 erkennbar. Weiterhin sind Abschnitte eines Zauns 7 erkennbar.
Figur 2 zeigt schematisch eine perspektivische Ansicht des Senkrechtförderer-Moduls 8 aus Figur 1, wobei die Bühne 4, der Zaun 7, die Barrieren 5, 6 und der Fahrweg 1 nicht dargestellt sind.
Figur 3 zeigt schematisch eine perspektivische Ansicht des rechts in den Figuren 1 und 2 dargestellten Übergabeplatzes 2. Ausgehend von Figur 3 sind in den Figuren 3a bis 3q schematisch unterschiedliche Sequenzen betreffend das Öffnen und Schliessen verschiedenartiger erster und zweiter Barrieren 5, 6 gezeigt.
Die Figuren 4 bis 6 zeigen eine Sequenz beim Schliessen einer übergeordneten Barriere 9.
Figur 7 zeigt einen Fahrweg 1 umfassend eine Abstell-Schiene 10 und eine Fahrschiene 11.
Die Figuren 8 und 9 zeigen eine Sequenz beim Schliessen zweier separat ausgebildeter Barrieren 5, 6.

### Bezugnehmend auf die Figuren 1 bis 9 erklärt sich die Funktionsweise der erfindungsgemässen Vorrichtung folgendermassen:

Die in Figur 1 ausschnittsweise gezeigte Anordnung ist Bestandteil eines Shuttle-Systems. Der Senkrechtförderer 3 fördert Ladungsträger, Waren oder Shuttles in y-Richtung von einer der Regalebenen zu einer anderen.

In Betriebslage verkehren auf dem Fahrweg 1 Shuttles (nicht eingezeichnet). Der Fahrweg 1 ist Teil einer sich in x- und z-Richtung erstreckenden Regalebene, welche in Figur 1 der Übersicht halber nicht dargestellt ist. Der Fahrweg 1 kann als durchgehende Fläche ausgebildet sein, oder Schienen umfassen.

Um beispielsweise eine Palette an den Senkrechtförderer 3 zu übergeben, damit sie von diesem in eine andere Regalebene transportiert wird, fährt ein (nicht eingezeichnetes) Shuttle in einen der Übergabeplätze 2 ein und stellt die Palette dort ab. Der Senkrechtförderer 3 nimmt die Palette beispielsweise mit einer Teleskopgabel oder einem anderen Lastaufnahmemittel (nicht gezeigt) auf, und befördert diese anschliessend senkrecht zur Ziel-Ebene.

In Betriebslage sind die ersten Barrieren 6 geöffnet, was in Figur 1 durch gestrichelte Linien angedeutet ist. Die zweiten Barrieren 5 sind in Betriebslage geschlossen, was in Figur 1 mit durchgezogenen Linien angedeutet ist. Gemeinsam mit den Zäunen 7 hindern diese Barrieren 5 Bedienpersonen daran, über die Bühne 4, welche beispielsweise über eine Leiter oder Treppe zugänglich ist, in die Regalebene einzutreten.

Tritt in dem in Figur 1 dargestellten Senkrechtförderer-Modul 8 eine Störung auf, so kann eine Bedienperson nach dem Öffnen zumindest einer der ersten Barrieren 5 in das Modul eintreten und die Störung beheben. Hierbei sind vorzugsweise beide zweiten Barrieren 6 geschlossen.

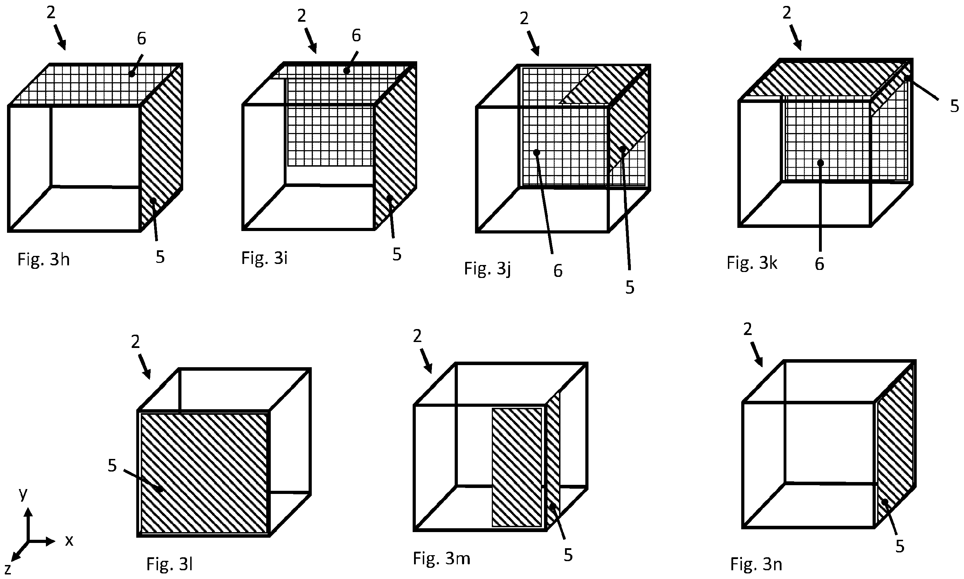

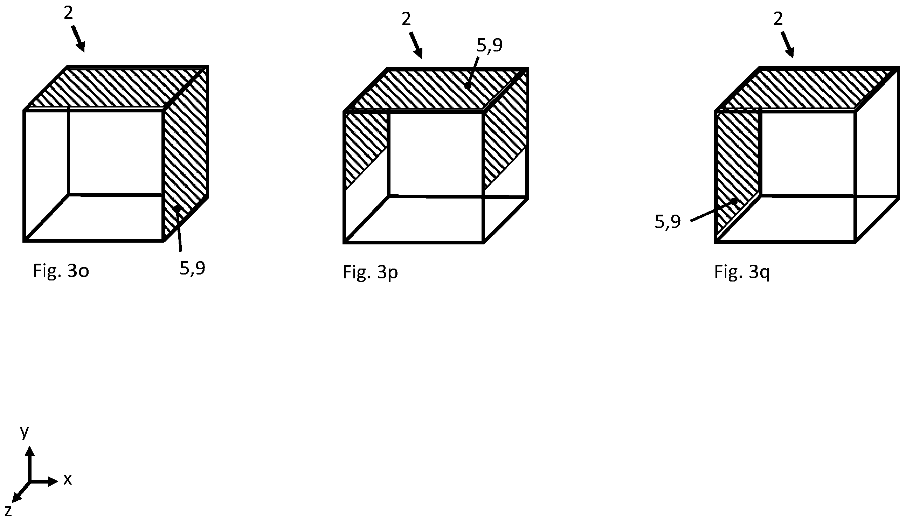

Eine in y-Richtung gemessene Höhe der in den Figuren 2 und 3 dargestellten Quader, welche die Übergabeplätze 2 und einen Abschnitt des Senkrechtförderers 3 symbolisieren, entspricht dem vertikalen Abstand zwischen den Regalebenen des Regalbaus.

In Bezug auf Figur 3 lassen sich mögliche Anordnungen, Varianten und Vorteile der Barrieren 5, 6 veranschaulichen. Der in Figur 3 nur sehr schematisch dargestellte Übergabeplatz 2 entspricht dem rechts in den Figuren 1 und 2 dargestellten Übergabeplatz 2.

Der in Figur 3 dargestellte Übergabeplatz 2 ist durch sechs Seiten von benachbarten Abschnitten des Shuttle-Systems abgegrenzt.

Die parallel zur x-z-Ebene verlaufende Ober- und Unterseiten grenzen den Übergabeplatz 2 gegenüber den darüber und darunter liegenden Übergabeplätzen (nicht gezeigt) ab, welche an die oberhalb und unterhalb liegenden Regalebenen (nicht gezeigt) angrenzen.

Die parallel zur x-y-Ebene verlaufende Vorderseite kann, wie in Figur 1 ersichtlich, durch einen Zaun 7 (in Figur 3 nicht gezeigt) von der Bühne 4 abgegrenzt sein. Alternativ kann die Vorderseite einen ersten Durchgang umfassen, der von einer ersten Barriere 5 (in Figur 3 nicht gezeigt) verschliessbar ist.

Die ebenfalls parallel zur x-y-Ebene verlaufende Rückseite grenzt an den Fahrweg 1 (in Figur 3 nicht gezeigt) der entsprechenden Regalebene an und umfasst den zweiten Durchgang.

Die parallel zur y-z-Ebene verlaufende rechte Seite in Figur 3 kann den (nicht mit einer gesonderten Bezugsziffer bezeichneten) ersten Durchgang umfassen, welcher in Figur 1 von der rechts dargestellten ersten Barriere 5 verschlossen werden kann. Umfasst bereits die Vorderseite einen ersten Durchgang, so kann die rechte Seite auch durch einen Zaun 7 von der Bühne 4 abgegrenzt sein.

Die ebenfalls parallel zur y-z-Ebene verlaufende linke Seite des in Figur 3 schematisch dargestellten Übergabeplatzes 2 umfasst einen Durchgang zwischen dem Übergabeplatz 2 und dem (nur in den Figuren 1 und 2 dargestellten) Senkrechtförderer 3.

Nachstehend werden in Bezug auf Figur 3 verschiedene mögliche Anordnungen, Varianten und Vorteile verschiedener Barrieren 5, 6 erläutert.

Als erste und zweite Barriere 5, 6 kommen Rolltore in Betracht. Ein geschlossenes Rolltor verschliesst in bekannter Weise den ersten und zweiten Durchgang und wirkt somit als Zugangsverhinderung. Ist das Rolltor entsprechend stabil ausgeführt, kann es auch als Puffer dienen. Derartige Rolltore werden geöffnet, indem sie in positiver y-Richtung nach oben bewegt und dabei üblicherweise aufgerollt werden. Eine entsprechende Rolle kann sich nahe der Oberseite befinden, die in Figur 3, wie bereits erwähnt, parallel zur x-z.-Ebene verläuft. Das Auf- und Abrollen von als Rolltor ausgestalteten ersten und zweiten Barrieren 5, 6 entsprechend einer Variante des erfindungsgemässen Verfahrens ist der Sequenz gemäss den Figuren 3a bis 3d dargestellt.

Als erste und zweite Barriere 5, 6 kommen Schranken in Betracht. Jeder Durchgang kann von einer einzigen oder von mehreren Schranken, beispielsweise von zwei Schranken, verschlossen sein. Die zumindest eine Schranke wirkt als Zugangswarnung für eine Bedienperson. Ist die Schranke auf passender Höhe installiert und ausreichend stabil gebaut, kann sie auch als Puffer für ein fehlerhaft auf den Übergabeplatz 2 einfahrendes Shuttle wirken. Derartige Schranken können geöffnet und geschlossen werden, indem sie innerhalb der Regalebene des von ihnen verschlossenen Durchgangs hoch- oder heruntergeklappt werden. Alternativ können Schranken geöffnet und geschlossen werden, indem sie um eine parallel zur y-Achse verlaufende Drehachse gedreht werden. Das Öffnen und Schliessen von als Schranken ausgestalteten ersten und zweiten Barrieren 5, 6 entsprechend einer Variante des erfindungsgemässen Verfahrens ist der Sequenz gemäss den Figuren 3e bis 3g dargestellt. In Figur 3e ist die als Schranke gestaltete zweite Barriere 6 geöffnet und die ebenfalls als Schranke gestaltete erste Barriere 5 geschlossen, in Figur 3g ist es genau umgekehrt.

Als erste und zweite Barriere 5, 6 kommen Sektionaltore in Betracht. Sektionaltore wirken als Zugangsverhinderung und können als Puffer wirken, wenn sie ausreichend stabil ausgeführt sind. Ein Sektionaltor, welches einen der Durchgänge auf der Vorderseite, der Rückseite oder der rechten Seite des in Figur 3 gezeigten Übergabeplatzes 2 versperren kann, kann geöffnet werden, indem eines seiner Enden den betreffenden Durchgang durch Hochziehen oder Hochfahren in positiver y-Richtung freigibt, während ein gegenüberliegendes Ende des Sektionaltors in oder nahe der Oberseite des Übergabeplatzes 2 in eine parallel zur x-z-Ebene befindliche Lage einfährt. Diese Betriebsweise eines Sektionaltors ist von üblichen Garagentüren bekannt, die oftmals als Sektionaltor ausgeführt sind. Ein vorstehend beschriebenes Sektionaltor kann so dimensioniert sein, dass es sowohl in der geöffneten als auch in der geschlossenen Position nur eine Seite des in Figur 3 schematisch dargestellten Übergabeplatzes 2 einnimmt bzw. versperrt. Derartige Sektionaltore können als separate erste oder zweite Barriere 5, 6 dienen. Das Öffnen und Schliessen von als Sektionaltor ausgestalteten ersten und zweiten Barrieren 5, 6 entsprechend einer Variante des erfindungsgemässen Verfahrens ist der Sequenz gemäss den Figuren 3h bis 3k dargestellt.

Es kann auch daran gedacht sein, ein horizontal bewegliches Sektionaltor als separate erste oder zweite Barriere 5, 6 einzusetzen. Soll beispielsweise der rechts in den Figuren 1 und 3 befindliche erste Durchgang von einem horizontal beweglichen Sektionaltor als erster Barriere 5 versperrt werden, so kann dieses in der geöffneten Position so verschoben werden, dass es im Wesentlichen in der Vorderseite des Übergabeplatzes (vgl. Fig. 3) zum Stehen kommt. Da die Vorderseite in der Anordnung nach Figur 1 von einem Zaun verschlossen ist, behindert das dort in der geöffneten Position befindliche Sektionaltor den Betrieb nicht. In der geschlossenen Position wird das Sektionaltor dann verschoben, indem eines seiner Enden die Vorderseite verlässt, indem es sich in positiver x-Richtung bewegt, während das gegenüberliegende Ende den ersten Durchgang versperrt, welcher auf der rechten Seite in Figur 3 liegt, indem es sich entsprechend in negativer z-Richtung bewegt. Das Öffnen und Schliessen einer als Sektionaltor ausgestalteten ersten Barriere 5 entsprechend einer Variante des erfindungsgemässen Verfahrens ist der Sequenz gemäss den Figuren 3l bis 3n dargestellt. Die zweite Barriere 6 ist in dieser Sequenz nicht dargestellt.

Alternativ kann daran gedacht sein, ein Sektionaltor als übergeordnete Barriere 9 auszugestalten. Befindet sich der erste Durchgang auf der rechten Seite, so kann ein Sektionaltor so gestaltet sein, dass es auch den dritten Durchgang zwischen dem Übergabeplatz 2 und dem Senkrechtförderer 3 verschliessen kann. Hierzu kann das Sektionaltor so lang sein, dass es in der geschlossenen Position, in der es den ersten Durchgang auf der rechten Seite (vgl. Fig. 3) versperrt, zusätzlich die Oberseite versperrt bzw. dort zum Liegen kommt. Der Abschnitt des Sektionaltors, welcher in der geschlossenen Position (erster Durchgang versperrt) die Oberseite versperrt, bewegt sich beim Öffnen des ersten Durchgangs in negativer y-Richtung in die linke Seite, um den dritten Durchgang zu versperren. Ein derart als übergeordnete Barriere 9 ausgebildetes Sektionaltor versperrt also stets entweder die linke Seite, also den dritten Durchgang, oder die rechte Seite, also den ersten Durchgang, und kann zwischen diesen Positionen hin- und her bewegt werden. Das Öffnen und Schliessen einer als übergeordnetes Sektionaltor ausgestalteten ersten Barriere 5, 9 entsprechend einer Variante des erfindungsgemässen Verfahrens ist der Sequenz gemäss den Figuren 3o bis 3q dargestellt. Die zweite Barriere 6 ist in dieser Sequenz nicht dargestellt.

Ein derart als übergeordnete Barriere 9 ausgebildetes Sektionaltor versperrt also vorzugsweise stets mehr als eine Seite. Je nach Länge des Sektionaltores und Verlauf etwaiger zugehöriger Führungsschienen, kann daran gedacht sein, dass das Tor mindestens stets eine Seite vollständig versperrt. Die Anordnung kann so gewählt werden, dass gegenüberliegende Seiten des Übergabeplatzes 2 wechselweise geöffnet und freigegeben werden. Weiterhin kann die Anordnung so ausgeführt werden, dass bei zwei über eine Kante aneinander angrenzenden Seiten des Übergabeplatzes 2, eine der Seiten stets vollständig geschlossen ist.

Vorstehend wurde ein Sektionaltor als übergeordnete Barriere 9 beschrieben, welches sich in Bezug auf den ersten Durchgang vertikal bewegen kann. Die in den Figuren 3o bis 3q gezeigte übergeordnete Barriere 9 könnte also als vertikal verschiebbar bezeichnet werden.

Es kann auch an Sektionaltore als übergeordnete Barrieren gedacht sein, welche sich horizontal bewegen. Die Anordnung und Funktionsweise eines solchen Sektionaltors oder einer ähnlichen übergeordneten Barriere 9 geht aus den Figuren 4 bis 6 hervor:
In Betriebslage, d.h. während Normalbetrieb im Shuttle-System herrscht, ist der auf der rechten Seite befindliche erste Durchgang des Übergabeplatzes 2 geschlossen und der auf der Rückseite zwischen Fahrweg 1 und Übergabeplatz 2 befindliche zweite Durchgang geöffnet. Bevor eine Bedienperson zwecks Beheben einer Störung den ersten Durchgang passieren kann, muss die übergeordnete Barriere 9 die in den Figuren 5 und 6 gezeigte Sequenz durchlaufen. Hierbei wirkt die übergeordnete Barriere 9 zu jedem Zeitpunkt als Zugangsverhinderung in Bezug auf zumindest einen der Durchgänge. Sobald die übergeoordnete Barriere 9 beginnend bei der Anordnung nach Figur 5 den ersten Durchgang freigibt, ist der zweite Durchgang bereits vollständig verschlossen. Eine Bedienperson kann sich also zu keinem Zeitpunkt neben der Barriere 9 durch beide Durchgänge hindurchzwängen, um auf den Fahrweg 1 und somit in die entsprechende Regalebene zu gelangen. Um ein solches Hindurchzwängen zu verhindern, ist es im Allgemeinen vorteilhaft, wenn eine übergeordnete Barriere 9 eine innerhalb der x-z-Ebene gemessene ausreichende Länge aufweist.

Aus den Figuren 4 bis 6 geht hervor, dass die übergeordnete Barriere 9 die Funktionen der ersten Barriere 5 und der zweiten Barriere 6 vollständig ersetzen kann. Es kann also davon die Rede sein, dass die erste und die zweite Barriere 5, 6 Bestandteile der übergeordneten Barriere 9 sind bzw. durch Abschnitte derselben bereitgestellt werden. Hierbei kann derselbe Abschnitt der übergeordneten Barriere 9 je nach Position einmal als erste Barriere 5 und in einer anderen Position als zweite Barriere 6 dienen.

Es kann auch daran gedacht sein, eine Tür oder ein Tor als separate erste oder zweite Barriere 5, 6 einzusetzen. Eine Tür kann beispielsweise schwenkbar ausgebildet sein, wie dies von Wohnungstüren her bekannt ist. Eine als erste Barriere 5 eingesetzte Tür kann um eine parallel zur y-Achse verlaufende Schwenkachse verschwenkbar sein, um den ersten Durchgang optional zu verschliessen. Eine Schiebetür kann starr oder zumindest teilweise flexibel ausgebildet sein. Die Funktionsweise einer zumindest teilweise flexiblen Schiebetür entspricht im Wesentlichen derjenigen des schon beschriebenen Sektionaltors. Die Figuren 8 und 9 zeigen schematisch, wie eine starr ausgebildete Schiebetür als zweite Barriere 6 und eine schwenkbare Tür als erste Barriere 5 eingesetzt werden kann. In der Anordnung nach Figur 8 gewährt die geöffnete erste Barriere 5 der Bedienperson Zutritt zum Übergabeplatz 2 zur Behebung einer Störung. Die zweite Barriere 6 ist verschlossen. In der Anordnung nach Figur 9 versperrt die geschlossene erste Barriere 5 den ersten Durchgang. Die zweite Barriere 6 kann entweder in die gestrichelt angedeutete Position oder in die mit durchgezogenen Linien dargestellte Position verschoben sein, um dem (nicht gezeigten) Shuttle die Einfahrt in den Übergabeplatz 2 in negativer z-Richtung zu erlauben.

Zu den Ausführungsvarianten gemäss den Figuren sind zahlreiche Alternativen denkbar:
Kommen Poller als erste oder zweite Barriere 5, 6 zum Einsatz, so wirken diese als Zutrittswarnung und Puffer. Ein solcher Poller versperrt den ersten oder zweiten Durchgang und kann entlang der y-Achse ein- und ausgefahren werden.

Es kann auch daran gedacht sein, ein Scherengitter als erste und zweite Barriere 5, 6 einzusetzen. Scherengitter können auf Grund des Scherenmechanismus in die Länge gezogen und gestaucht werden. Ein entlang der y-Achse beweglich angeordnetes Scherengitter kann ähnlich einem Rolltor funktionieren. Ein horizontal beweglich geführtes Scherengitter kann vorteilhafterweise während dem Öffnen gestaucht werden, so dass es beispielsweise im Vergleich zu der in den Figuren 8 und 9 schematisch gezeigten Schiebetür, welche dort als zweite Barriere 6 fungiert, in der offenen Position analog Figur 9 weniger Stauraum benötigt.

Die Durchgänge, d.h. die ersten, zweiten und dritten Durchgänge, sind in den Figuren nicht gesondert mit Bezugsziffern gekennzeichnet. Allerdings geht ihre Lage beispielsweise aus den Figuren 3a ff. hervor: In den Figuren 3a bis 3k versperrt die zweite Barriere 6 im geschlossenen Zustand den zweiten Durchgang. In den Figuren 3a bis 3n versperrt die erste Barriere 5 im geschlossenen Zustand den ersten Durchgang. In Figur 3o versperrt die erste und übergeordnete Barriere 5, 9 den ersten Durchgang und in Figur 3q den dritten Durchgang.

Alle ersten Barrieren 5, die in den Figuren 3a bis 3q gezeigt sind, können mit beliebigen zweiten Barrieren 6, welche in den Figuren 3a bis 3kgezeigt sind, kombiniert werden.

Es sind alternative Fahrwege 1 zu der in Figur 7 gezeigten Anordnung umfassend eine beidseits c-förmige Struktur mit Abstell-Schiene 10 und Fahrschiene 11 denkbar. Vorzugsweise kann die in Figur 7 gezeigte Struktur dort zum Einsatz kommen, wo ein Abstellen von Ladegütern oder dergleichen auch nötig ist. Auf den übrigen Fahrwegen 1 innerhalb der Regalebenen, wo die Ladegüter etc. nicht abgestellt werden müssen, kann die Anordnung von Fahrschienen 11 genügen, welche ähnlich wie Eisenbahnschienen lediglich zwei parallel verlaufende Schienen-Profile umfassen können, oberhalb derer keine Abstell-Schienen 10 vorgesehen sind.

Insbesondere an Kreuzungen oder im Allgemeinen dort, wo ein Abbiegen nötig ist, würde eine im Querschnitt beidseits c-förmig ausgebildete Schienen-Struktur gemäss Figur 7 ein Shuttle am Abbiegen hindern. An Kreuzungen oder dergleichen wird daher vorzugsweise auf die Abstell-Schienen 10 verzichtet.

Die Übergabeplätze 2 und/oder etwaige Lagerplätze innerhalb der Regalebenen können aber so ausgebildet sein, wie in Figur 7 gezeigt.

### Bezugszeichenliste

| | |
|---|---|
| 1 | Fahrweg |
| 2 | Übergabeplatz |
| 3 | Senkrechtförderer |
| 4 | Bühne |
| 5 | Erste Barriere |
| 6 | Zweite Barriere |
| 7 | Zaun |
| 8 | Senkrechtförderer-Modul |
| 9 | Übergeordnete Barriere |
| 10 | Abstell-Schiene |
| 11 | Fahrschiene |
| 12 | |
| 13 | |
| 14 | |
| 15 | |
| 16 | |
| 17 | |
| 18 | |
| 19 | |
| 20 | |
| 21 | |
| 22 | |
| 23 | |
| 24 | |
| 25 | |
| 26 | |
| 27 | |
| 28 | |
| 29 | |
| 30 | |
| 31 | |
| 32 | |
| 33 | |

## Patentansprüche

1. Shuttle-System mit einem Regalbau umfassend mehrere Regalebenen und mit zumindest einem Senkrechtförderer-Modul (8) umfassend zumindest einen Senkrechtförderer (3),
**dadurch gekennzeichnet, dass**
das zumindest eine Senkrechtförderer-Modul (8) auf Höhe einer an das Senkrechtförderer-Modul (8) angrenzenden Regalebene zumindest eine erste Barriere (5) umfasst, welche zwischen einer offenen und einer geschlossenen Position hin- und her bewegt werden kann, wobei die erste Barriere (5) eingerichtet ist, in der offenen Position einer Bedienperson Zutritt zu zumindest einem Abschnitt des Senkrechtförderer-Moduls (8) zu gewähren, wobei dieser zumindest eine Abschnitt ebenfalls auf Höhe der angrenzenden Regalebene liegt,
wobei zwischen dem zumindest einen Abschnitt des Senkrechtförderer-Moduls (8) und der angrenzenden Regalebene zumindest eine zweite Barriere (6) angeordnet ist, welche zwischen einer offenen und einer geschlossenen Position hin- und her bewegt werden kann, wobei die zweite Barriere (6) eingerichtet ist, in der offenen Position einem in der angrenzenden Regalebene verkehrenden Shuttle eine Einfahrt in den zumindest einen Abschnitt zu gewähren und/oder in der geschlossenen Position der Bedienperson den Zutritt zur angrenzenden Regalebene zu verwehren,
wobei die erste Barriere (5) derart angeordnet ist, dass eine Bedienperson von aussen über die erste Barriere Zugang zu dem zumindest einen Abschnitt des Senkrechtförderer-Moduls (8) erlangen kann, ohne dabei einen Fahrweg (1) des zumindest einen Shuttles zu kreuzen, wenn sich die erste Barriere (5) in der offenen Position befindet.

2. Shuttle-System nach Anspruch 1, **dadurch gekennzeichnet, dass** die erste und/oder die zweite Barriere Bestandteile einer übergeordneten Barriere (9), beispielsweise eines horizontal verschiebbaren Sektionaltors, sind.

3. Shuttle-System nach Anspruch 1, **dadurch gekennzeichnet, dass** die erste und die zweite Barriere (5, 6) separate Einheiten sind, welche derart miteinander gekoppelt sind, dass die erste Barriere (5) einer Bedienperson nur dann Zugang zu dem zumindest einen Abschnitt des Senkrechtförderer-Moduls (8) gewährt, wenn die zweite Barriere (6) dem Shuttle keinen Zugang zu dem zumindest einen Abschnitt des Senkrechtförderer-Moduls (8) gewährt und/oder wenn die zweite Barriere (6) der Bedienperson den Zutritt zur angrenzenden Regalebene über das Senkrechtförderer-Modul (8) verwehrt.

4. Shuttle-System nach einem der Ansprüche 1 oder 3, **dadurch gekennzeichnet, dass** die erste Barriere (5) ausgewählt ist aus einer Gruppe umfassend Zugangs-Verhinderungs-Einrichtungen wie beispielsweise Türen, Tore oder Gitter und Zugangs-Warn-Einrichtungen wie beispielsweise Schranken oder Poller.

5. Shuttle-System nach Anspruch 3, **dadurch gekennzeichnet, dass** die Barrieren (5, 6) mechanisch miteinander gekoppelt sind.

6. Shuttle-System nach Anspruch 3, **dadurch gekennzeichnet, dass** die Barrieren (5, 6) über einen geteilten Schlüssel miteinander gekoppelt sind.

7. Shuttle-System nach Anspruch 3, **dadurch gekennzeichnet, dass** die Barrieren (5, 6) elektronisch miteinander gekoppelt sind.

8. Verfahren zum Beheben einer Störung in einem Senkrechtförderer-Modul (8) eines Shuttle-Systems gemäss zumindest einem der Ansprüche 1 bis 7, **gekennzeichnet durch** folgende Schritte:
- Schliessen der zumindest einen zweiten Barriere (6)
- Öffnen der zumindest einen ersten Barriere (5).

9. Verfahren nach Anspruch 8, **dadurch gekennzeichnet, dass** vor dem Öffnen der zumindest einen ersten Barriere (5) eine Plattform oder eine Kabine auf eine Höhe bewegt wird, welche ein Hinabstürzen einer über die erste Barriere (5) in das Senkrechtförderer-Modul (8) eingetretenen Bedienperson in einen Senkrechtförderer-Schacht verhindert.

10. Verfahren nach einem der Ansprüche 8 oder 9, **dadurch gekennzeichnet, dass** etwaige funktionstüchtige Shuttles vor dem Öffnen der zumindest einen ersten Barriere (5) das Senkrechtförderer-Modul (8) verlassen.

11. Verfahren nach zumindest einem der Ansprüche 8 bis 10 zum Beheben einer Störung in einem Senkrechtförderer-Modul (8) eines Shuttle-Systems gemäss zumindest Anspruch 3 sowie gegebenenfalls zumindest einem der Ansprüche 4, 5 oder 7, **gekennzeichnet durch** folgende Schritte:
- Empfangen einer Zutrittsanforderung betreffend das Senkrechtförderer-Modul (8)
- Schliessen der zumindest einen zweiten Barriere (6)
- Öffnen der zumindest einen ersten Barriere (5), sobald die zweite Barriere (5) dem Shuttle keinen Zugang zu dem zumindest einen Abschnitt des Senkrechtförderer-Moduls (8) gewährt und/oder, sobald die zweite Barriere (6) der Bedienperson den Zutritt zur angrenzenden Regalebene über das Senkrechtförderer-Modul (8) verwehrt.

12. Verfahren nach Anspruch 11, wobei nach dem Empfangen der Zutritts-Anforderung etwaige in dem Senkrechtförderer-Modul (8) befindliche Shuttles und/oder etwaige auf dem Weg zu dem Senkrechtförderer-Modul (8) befindliche Shuttles und/oder etwaige in der näheren Umgebung des Senkrechtförderer-Moduls (8) befindliche Shuttles und/oder sämtliche auf der angrenzenden Regalebene befindliche Shuttles in den Stillstand versetzt werden.
